# EUROPÄISCHE PATENTSCHRIFT

(11) **EP 2 980 525 B1**
(45) Veröffentlichungstag und Bekanntmachung des Hinweises auf die Patenterteilung: **19.12.2018**
(21) Anmeldenummer: 15176437.0
(22) Anmeldetag: 13.07.2015
(51) Int. Cl.: G01B 9/02

(54) **TRIPLE-PASS INTERFEROMETER**
INTERFEROMETER MIT DREIFACHEM DURCHGANG
INTERFEROMETRE À TRIPLE PASSAGE

(30) Priorität: 29.07.2014 DE 102014214839
(43) Veröffentlichungstag der Anmeldung: 03.02.2016
(73) Patentinhaber: Dr. Johannes Heidenhain GmbH, 83301 Traunreut (DE)
(72) Erfinder: MEISSNER, Markus, 83236 Übersee (DE)

(56) Entgegenhaltungen:
- DE-A1- 10 317 387
- DE-A1-102004 049 646
- US-A1- 2004 047 027
- US-A1- 2006 039 005
- US-A1- 2008 117 440

## Beschreibung

### GEBIET DER TECHNIK

Die vorliegende Erfindung betrifft ein Interferometer, das insbesondere zur hochpräzisen Längen- und/oder Abstandsmessung geeignet ist.

### STAND DER TECHNIK

Ein sog. Planspiegel-Interferometer ist aus der US 4,752,133 bekannt. Dieses umfasst eine Lichtquelle, einen ersten Strahlteiler sowie eine Detektionseinheit. Über den ersten Strahlteiler wird ein von der Lichtquelle emittiertes Strahlenbündel in mindestens ein Messstrahlenbündel und mindestens ein Referenzstrahlenbündel aufgespalten. Das Messstrahlenbündel und das Referenzstrahlenbündel propagieren sodann jeweils in einem Messarm und in einem Referenzarm bis zur Wiedervereinigung am Strahlteiler. Im Messarm ist ein als Planspiegel ausgebildeter Messreflektor an einem beweglichen Messobjekt angeordnet; der Referenzarm weist mindestens einen Referenz-Reflektor auf. Mit Hilfe der Detektionseinheit ist mindestens ein Abstandssignal aus den wiedervereinigten, interferierenden Mess- und Referenzstrahlenbündeln bzgl. der Position des Messobjekts erfassbar.

Als Strahlteiler ist in der US 4,752,133 ein Polarisations-Strahlteilerwürfel vorgesehen, als Referenz-Reflektor dient ein Planspiegel, der zwischen den Messstrahlenbündeln angeordnet ist. Das gemeinsame Tripelprisma von Referenz- und Messarm ist hierbei am Strahlteilerwürfel angeklebt oder angesprengt; desweiteren kann das Tripelprisma auch räumlich getrennt vom Strahlteilerwürfel angeordnet werden.

Als nachteilig an derartigen Interferometern ist anzuführen, dass sowohl der Polarisations-Strahlteilerwürfel als auch das Tripelprisma nur sehr aufwendig herstellbar sind. So müssen beim Strahlteilerwürfel die verschiedenen Seiten hochexakt zueinander ausgerichtet sein, insbesondere wenn ein oder mehrere Tripelprismen und ggf. weitere optische Bauelemente unmittelbar daran angeordnet werden. Im Fall der räumlich getrennten Anordnung von Strahlteilerwürfel und Tripelprismen ist eine ebenfalls sehr aufwendige, driftarme Lagerung dieser Bauteile erforderlich. Hinzu kommt, dass bei großen geforderten Kipp-Toleranzen des Messobjekts das Tripelprisma relativ groß bauend ausgebildet sein muss.

Weitere Beispiele für Interferometer mit Strahlteilerwürfeln und Prismen sind in der DE 103 17 387 A1 sowie in der US 2004/0047027 A1 zu finden. Im Gegensatz dazu beschreibt die DE 10 2004 049 646 A1 ein Planplatten-Interferometer, in dem mehrere Platten mit entsprechenden Beschichtungen die Strahlaufteilung und Rekombination vornehmem.

### ZUSAMMENFASSUNG DER ERFINDUNG

Der vorliegenden Erfindung liegt die Aufgabe zugrunde, ein kompakt aufgebautes Interferometer zu schaffen, das möglichst einfach zu fertigende optische Komponenten aufweist.
Diese Aufgabe wird erfindungsgemäß durch ein Interferometer mit den Merkmalen des Anspruchs 1 gelöst.

Vorteilhafte Ausführungen des erfindungsgemäßen Interferometers ergeben sich aus den Maßnahmen, die in den abhängigen Ansprüchen aufgeführt sind.

Das erfindungsgemäße Interferometer umfasst
- eine Lichtquelle,
- einen ersten Strahlteiler, der ein von der Lichtquelle emittiertes Strahlenbündel in mindestens ein Messstrahlenbündel und mindestens ein Referenzstrahlenbündel aufspaltet, über die eine Aufspaltebene aufgespannt ist und wobei bis zur Wiedervereinigung an einem Vereinigungsort in einer Vereinigungsebene das Messstrahlenbündel in einem Messarm und das Referenzstrahlenbündel in einem Referenzarm propagiert, wobei die Vereinigungsebene parallel zur Aufspaltebene orientiert ist,
- einen Referenzreflektor der im Referenzarm angeordnet ist, wobei das Referenzstrahlenbündel mindestens dreimal auf den Referenzreflektor einfällt,
- einen Messreflektor, der im Messarm angeordnet und mit einem Messobjekt verbindbar ist, wobei das Messstrahlenbündel mindestens dreimal auf den Messreflektor einfällt,
- eine Detektionseinheit, über die mindestens ein Abstandssignal aus den am Vereinigungsort überlagerten, interferierenden Mess- und Referenzstrahlenbündeln bezüglich der Position des Messobjekts erfassbar ist und
- mindestens zwei transparente Planplatten, die in Strahlausbreitungsrichtung aufeinanderfolgend hintereinander und parallel zueinander im Strahlengang zwischen der Lichtquelle und der Detektionseinheit angeordnet sind, wobei mindestens der Messreflektor gegenüber den Planplatten und dem Referenzreflektor entlang einer Messrichtung beweglich ist, wobei die Messrichtung der Strahlausbreitungsrichtung zwischen den Planplatten und dem Messreflektor entspricht und die Planplatten jeweils mehrere optische Elemente umfassen, die eine derartige optische Wirkung auf das Messstrahlenbündel und das Referenzstrahlenbündel ausüben, dass das Messstrahlenbündel und das Referenzstrahlenbündel jeweils parallel zueinander in Richtung des Mess- und Referenzreflektors propagieren.

Erfindungsgemäß sind in den beiden Planplatten als optische Elemente mehrere Reflektoren und mindestens vier Abbildungsoptiken für das Messstrahlenbündel und das Referenzstrahlenbündel ausgebildet,
- wobei über zwei Abbildungsoptiken jeweils ein Versatz des Messstrahlenbündels und des Referenzstrahlenbündels aus der Aufspaltebene in eine Zwischenebene resultiert, die zwischen der Aufspaltebene und der Vereinigungsebene angeordnet und parallel zu diesen orientiert ist und
- wobei über zwei weitere Abbildungsoptiken jeweils ein Versatz des Messstrahlenbündels und des Referenzstrahlenbündels aus der Zwischenebene in die Vereinigungsebene resultiert.

Es können zwei Planplatten vorgesehen sein, wobei
- in der zweiten Planplatte eine erste Abbildungsoptik für das Messstrahlenbündel angeordnet ist,
- in der ersten Planplatte eine zweite Abbildungsoptik für das Messstrahlenbündel angeordnet ist,
- in der zweiten Planplatte eine dritte Abbildungsoptik für das Referenzstrahlenbündel angeordnet ist und
- in der ersten Planplatte eine vierte Abbildungsoptik für das Referenzstrahlenbündel angeordnet ist und
- über die erste und dritte Abbildungsoptik ferner eine Vergrößerung des Eingangs-Strahldurchmessers des darauf einfallenden Strahlenbündels resultiert und
- über die zweite und vierte Abbildungsoptik ferner eine Verkleinerung des Strahldurchmessers des darauf einfallenden Strahlenbündels auf den Eingangs-Strahldurchmesser resultiert.

Dabei können die Abbildungsoptiken jeweils zwei auf einer Seite einer Planplatte angeordnete reflektive Gitterlinsen und einen auf der gegenüberliegenden Seite der Planplatte angeordneten Reflektor umfassen, wobei die reflektierenden Seiten der Gitterlinsen und des Reflektors einander zugewandt sind.

Es ist hierbei möglich, dass
- die erste Abbildungsoptik
   - eine erste Gitterlinse und eine zweite Gitterlinse aufweist, die beide auf einer Seite der zweiten Planplatte angeordnet sind und
   - einen auf der gegenüberliegenden Seite der zweiten Planplatte angeordneten ersten Reflektor aufweist, wobei
   - über die erste Abbildungsoptik eine Verdopplung des Eingangs-Strahldurchmessers des darauf einfallenden Messstrahlenbündels resultiert, und dass
- die zweite Abbildungsoptik
   - eine dritte Gitterlinse und eine vierte Gitterlinse aufweist, die beide auf einer Seite der ersten Planplatte angeordnet sind und
   - einen auf der gegenüberliegenden Seite der ersten Planplatte angeordneten zweiten Reflektor aufweist, wobei
   - über die zweite Abbildungsoptik eine Halbierung des Strahldurchmessers des darauf einfallenden Messstrahlenbündels resultiert und dass
- die dritte Abbildungsoptik
   - eine fünfte Gitterlinse und eine sechste Gitterlinse aufweist, die beide auf einer Seite der zweiten Planplatte angeordnet sind und
   - einen auf der gegenüberliegenden Seite der zweiten Planplatte angeordneten dritten Reflektor aufweist, wobei
   - über die dritte Abbildungsoptik eine Verdopplung des Eingangs-Strahldurchmessers des darauf einfallenden Referenzstrahlenbündels resultiert, und dass
- die vierte Abbildungsoptik
   - eine siebte Gitterlinse und eine achte Gitterlinse aufweist, die beide auf einer Seite der ersten Planplatte angeordnet sind und
   - einen auf der gegenüberliegenden Seite der ersten Planplatte angeordneten vierten Reflektor aufweist, wobei
   - über die vierten Abbildungsoptik eine Halbierung des Strahldurchmessers des darauf einfallenden Referenzstrahlenbündels resultiert.

Mit Vorteil besitzt dabei die erste, vierte, fünfte und achte Gitterlinse jeweils eine erste Brennweite und die zweite, dritte, sechste und siebte Gitterlinse jeweils eine zweite Brennweite, die doppelt so groß ist wie die erste Brennweite.

Desweiteren kann das erfindungsgemäße Interferometer drei in Strahlausbreitungsrichtung beabstandet angeordnete Planplatten umfassen, wobei
- in der zweiten und dritten Planplatte eine erste Abbildungsoptik für das Messstrahlenbündel ausgebildet ist,
- in der zweiten und dritten Planplatte eine zweite Abbildungsoptik für das Messstrahlenbündel ausgebildet ist,
- in der ersten und zweiten Planplatte eine dritte Abbildungsoptik für das Referenzstrahlenbündel ausgebildet ist und
- in der ersten und zweiten Planplatte eine vierte Abbildungsoptik für das Referenzstrahlenbündel ausgebildet ist und
- über die erste und dritte Abbildungsoptik ferner eine Vergrößerung des Eingangs-Strahldurchmessers des darauf einfallenden Strahlenbündels resultiert und
- über die zweite und vierte Abbildungsoptik ferner eine Verkleinerung des Strahldurchmessers des darauf einfallenden Strahlenbündels auf den Eingangs-Strahldurchmesser resultiert.

Dabei kann vorgesehen sein, dass die Abbildungsoptiken jeweils zwei auf einer Planplatte angeordnete reflektive Gitterlinsen und einen auf der gegenüberliegenden Planplatte angeordneten Reflektor umfassen, wobei die reflektierenden Seiten der Gitterlinsen und des Reflektors einander zugewandt sind.

Es ist hierbei möglich, dass
- die erste Abbildungsoptik
   - eine erste Gitterlinse und eine zweite Gitterlinse aufweist, die beide auf der dritten Planplatte angeordnet sind und
   - einen auf der zweiten Planplatte angeordneten ersten Reflektor aufweist, wobei
   - über die erste Abbildungsoptik eine Verdopplung des Eingangs-Strahldurchmessers des darauf einfallenden Messstrahlenbündels resultiert, und dass
- die zweite Abbildungsoptik
   - eine dritte Gitterlinse und eine vierte Gitterlinse aufweist, die beide auf der ersten Planplatte angeordnet sind und
   - einen auf der zweiten Planplatte angeordneten zweiten Reflektor aufweist, wobei
   - über die zweite Abbildungsoptik eine Halbierung des Strahldurchmessers des darauf einfallenden Messstrahlenbündels resultiert und dass
- die dritte Abbildungsoptik
   - eine fünfte Gitterlinse und eine sechste Gitterlinse aufweist, die beide auf der dritten Planplatte angeordnet sind und
   - einen auf der zweiten Planplatte angeordneten dritten Reflektor aufweist, wobei
   - über die dritte Abbildungsoptik eine Verdopplung des Eingangs-Strahldurchmessers des darauf einfallenden Referenzstrahlenbündels resultiert, und dass
- die vierte Abbildungsoptik
   - eine siebte Gitterlinse und eine achte Gitterlinse aufweist, die beide auf der ersten Planplatte angeordnet sind und
   - einen auf der zweiten Planplatte angeordneten vierten Reflektor aufweist, wobei
   - über die vierte Abbildungsoptik eine Halbierung des Strahldurchmessers des darauf einfallenden Referenzstrahlenbündels resultiert.

Mit Vorteil besitzt die erste, vierte, fünfte und achte Gitterlinse jeweils eine erste Brennweite und die zweite, dritte, sechste und siebte Gitterlinse jeweils eine zweite Brennweite, die doppelt so groß ist wie die erste Brennweite.

Es ist desweiteren möglich, dass der erste Strahlteiler auf der zweiten Planplatte als Gitter oder als polarisationsoptische Strahlteilerschicht ausgebildet ist, welche jeweils die auf einer Seite der zweiten Planplatte angeordnet sind, die in Richtung der ersten Planplatte orientiert ist.

Ferner kann vorgesehen sein, dass der Messreflektor und der Referenzreflektor jeweils als Planspiegelreflektor ausgebildet sind.

Mit Vorteil ist im Strahlengang des Messstrahlenbündels eine Verzögerungsstrecke derart ausgebildet, dass das Messstrahlenbündel und das Referenzstrahlenbündel zwischen Aufspaltung und Wiedervereinigung identische optische Wege in Luft und in den Planplatten durchlaufen.

Weiterhin kann vorgesehen sein, dass
- das Messstrahlenbündel beim zweiten Auftreffen senkrecht auf den Messreflektor einfällt und
- das Referenzstrahlenbündel beim zweiten Auftreffen senkrecht auf den Referenzreflektor einfällt.

Es ist ferner möglich, dass zwischen den Planplatten Abstandshalter angeordnet sind, die Ausnehmungen im Bereich der zwischen den Planplatten propagierenden Mess- und Referenzstrahlenbündel aufweisen.

Als vorteilhaft erweist sich beim erfindungsgemäßen Interferometer, dass die aufwändige Herstellung eines Strahlteilerwürfels und ein oder mehrerer Tripelprismen entfällt. Nötig sind zur Implementierung der optischen Funktionalität dieser Elemente in den Strahlengängen erfindungsgemäß lediglich Planplatten, auf denen geeignete optische Elemente angeordnet sind. Derartige Planplatten sind inklusive der darauf angeordneten Elemente über geeignete Lithographieverfahren kostengünstig und einfach herzustellen; insbesondere ist dabei ein aufwändiges Polieren von 90°-Winkeln nicht mehr nötig. Es entfallen ferner die im Stand der Technik erforderlichen Klebungen in optisch relevanten Bereichen der Strahlengänge oder das Ansprengen von optischen Komponenten. Darüber hinaus ist auch keine aufwändige, driftarme Anordnung von optischen Bauteilen in den Strahlengängen mehr erforderlich.

Desweiteren ist im erfindungsgemäßen Interferometer auch im Fall einer Verkippung oder eines Versatzes des Messreflektors und/oder des Referenzreflektors aus seiner jeweiligen Nominallage gewährleistet, dass eine daraus resultierende Scherung des Mess- und/oder Referenzstrahlenbündels gewissermaßen intrinsisch kompensiert wird. Es resultiert auch in diesen Fällen kein Abfall des Modulationsgrades in den erzeugten Signalen.

Ferner ermöglicht die parallele Führung des Messstrahlenbündels und des Referenzstrahlenbündels in Richtung des jeweils zugehörigen Messreflektors bzw. Referenzreflektors, dass diese geometrisch voneinander getrennt sind und von daher die Relativposition von Objekten in verschiedenen Höhen messbar sind.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1a: den Strahlengangverlauf des ersten Ausführungsbeispiels des erfindungsgemäßen Interferometers in der Aufspaltebene;
- Figur 1b: den Strahlengangverlauf des ersten Ausführungsbeispiels des erfindungsgemäßen Interferometers in der Zwischenebene;
- Figur 1c: den Strahlengangverlauf des ersten Ausführungsbeispiels des erfindungsgemäßen Interferometers in der Vereinigungsebene;
- Figur 1d: den Strahlengangverlauf des ersten Ausführungsbeispiels des erfindungsgemäßen Interferometers in einer weiteren Ansicht;
- Figur 2a - 2c: jeweils Draufsichten aus verschiedenen Richtungen auf eine der beiden Planplatten des ersten Ausführungsbeispiels des erfindungsgemäßen Interferometers;
- Figur 3a - 3c: jeweils Draufsichten aus verschiedenen Richtungen auf die andere der beiden Planplatten des ersten Ausführungsbeispiels des erfindungsgemäßen Interferometers;
- Figur 4a: den Strahlengangverlauf des zweiten Ausführungsbeispiels des erfindungsgemäßen Interferometers in der Aufspaltebene;
- Figur 4b: den Strahlengangverlauf des zweiten Ausführungsbeispiels des erfindungsgemäßen Interferometers in der Zwischenebene;
- Figur 4c: den Strahlengangverlauf des zweiten Ausführungsbeispiels des erfindungsgemäßen Interferometers in der Vereinigungsebene;
- Figur 4d: den Strahlengangverlauf des zweiten Ausführungsbeispiels des erfindungsgemäßen Interferometers in einer weiteren Ansicht;
- Figur 5a - 5c: jeweils Draufsichten auf die im zweiten Ausführungsbeispiel des erfindungsgemäßen Interferometers verwendeten dünnen Planplatten.

### BESCHREIBUNG DER AUSFÜHRUNGSFORMEN

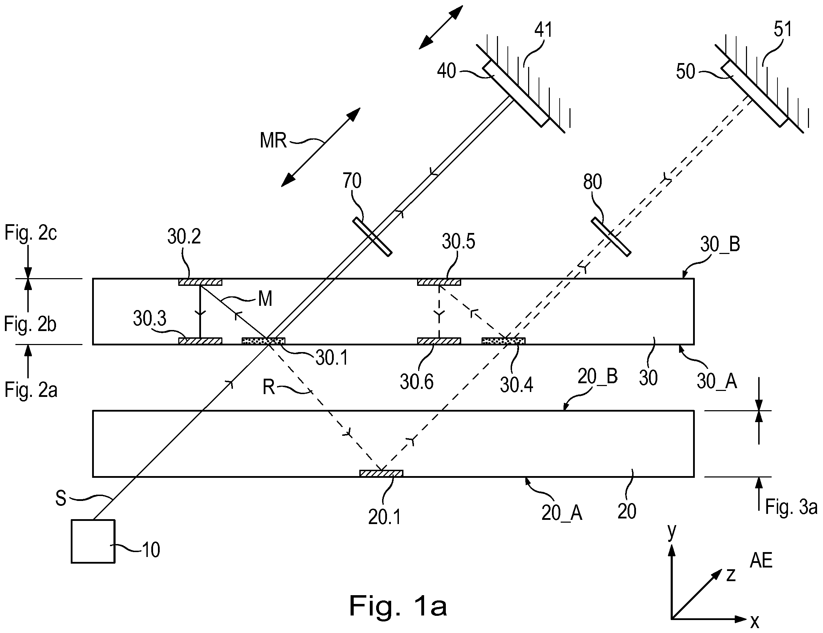

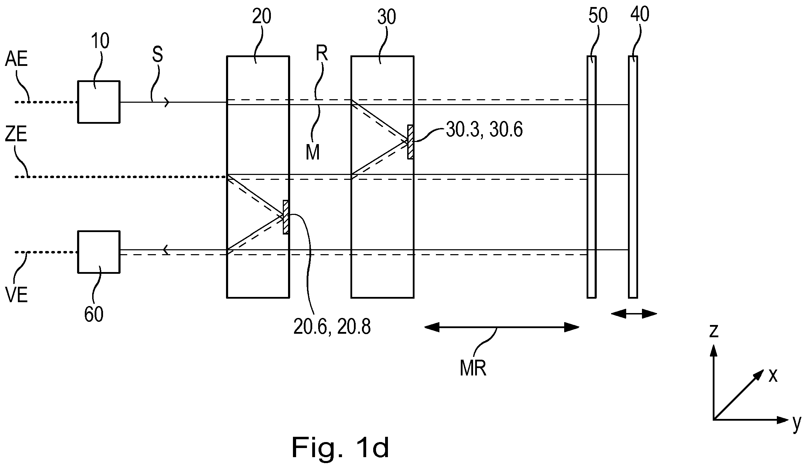

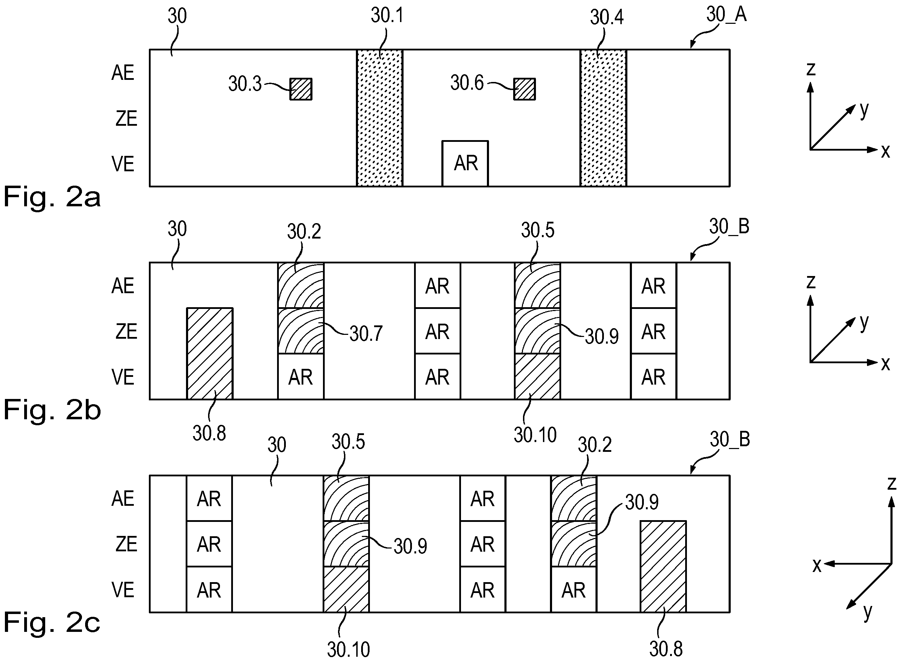

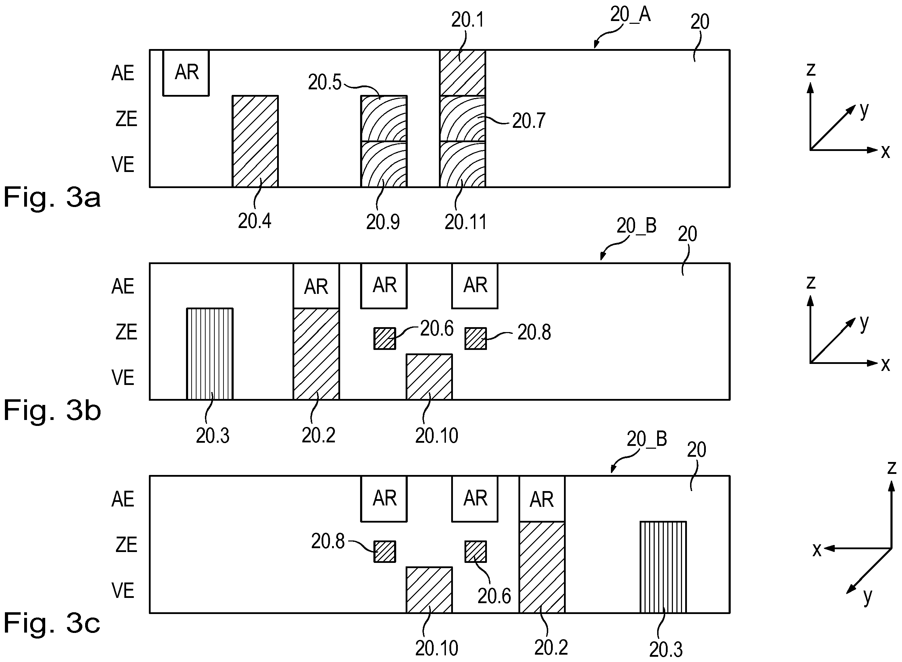

Ein erstes Ausführungsbeispiel des erfindungsgemäßen Interferometers wird nachfolgend anhand der Figuren 1a - 1d, 2a - 2c und 3a - 3c beschrieben. Die Figuren 1a - 1d zeigen hierbei den Strahlengangverlauf in unterschiedlichen Ansichten, die Figuren 2a - 2c bzw. 3a - 3c jeweils Draufsichten auf verschiedene Seiten der verwendeten Planplatten mit den darauf angeordneten optischen Elementen.

Das erfindungsgemäße Interferometer umfasst mindestens eine Lichtquelle 10, einen ersten Strahlteiler 30.1, einen Messreflektor 40, einen Referenzreflektor 50, eine Detektionseinheit 60 sowie mindestens zwei transparente Planplatten 20, 30. Die in den Figuren 1a - 1c jeweils untere Planplatte 20 wird nachfolgend als erste Planplatte 20 bezeichnet, die obere Planplatte 30 als zweite Planplatte. Die beiden Planplatten 20, 30, welche beispielsweise aus einem geeigneten Glasmaterial gefertigt werden, sind parallel zueinander in einem bestimmten Abstand im Strahlengang zwischen der Lichtquelle 10 und der Detektionseinheit 60 angeordnet. Wie aus den Figuren 1a - 1c ersichtlich, sind die beiden Planplatten 20, 30 im vorliegenden Ausführungsbeispiel desweiteren nicht-parallel zum Messreflektor 40 bzw. unter einem Winkel ungleich 90° gegenüber der Einfallsrichtung des von der Lichtquelle emittierten Strahlenbündels S angeordnet.

In einer möglichen Ausführungsform besitzen die beiden Planplatten 20, 30 etwa eine Länge von ca. 10 - 15 cm in der angegebenen x-Richtung, eine Breite von ca. 1 - 3 cm entlang der y-Richtung und eine Dicke von ca. 3 - 5 cm entlang der z-Richtung. Der Abstand der beiden Planplatten 20, 30 beträgt ca. 1 - 2 cm.

Der in einem Messarm angeordnete Messreflektor 40, ausgebildet als Planspiegel-Reflektor, ist mit einem Messobjekt 41 verbunden, das entlang einer Messrichtung MR beweglich gegenüber den restlichen Interferometer-Komponenten angeordnet ist. Die Messrichtung MR entspricht im vorliegenden Beispiel der Strahlausbreitungsrichtung zwischen den Planplatten 20, 30 und dem Messreflektor 40 und verläuft in den Figuren 1a - 1c demnach von links unten nach rechts oben.

Beim Messobjekt 41 kann es sich z.B. um ein Maschinenteil wie etwa einen Tisch einer Lithographieeinrichtung handeln, der entlang der Messrichtung MR beweglich angeordnet ist. Mit Hilfe des erfindungsgemäßen Interferometers wird mindestens ein Abstandssignal bzgl. einer Verschiebung des Messobjekts 41 entlang der Messrichtung MR ermittelt. Dieses Abstandssignal kann von einer - nicht dargestellten - Steuereinheit beispielsweise zur Positionierung des Maschinenteils genutzt werden.

In einem Referenzarm ist wie aus den Figuren 1a - 1c ersichtlich der Referenzreflektor 50 angeordnet, der ebenfalls als Planspiegel-Reflektor ausgebildet und mit einem Objekt 51 verbunden ist. Das Objekt 51 ist hierbei in einer typischen Anwendung zumeist entlang der Messrichtung MR stationär gegenüber dem beweglichen Messobjekt 50 in der entsprechenden Maschine angeordnet.

Maßgeblich ist in Bezug auf die Anordnung des Messreflektors 40 und des Referenzreflektors 50 dabei lediglich, dass eine Relativbeweglichkeit zwischen den entsprechenden Objekten 41, 51 bzw. dem Messreflektor 40 und dem Referenzreflektor 50 entlang der Messrichtung MR gegeben sein muss. Es wäre alternativ zur dargestellten Variante etwa auch möglich, dass der Messreflektor 40 stationär und der Referenzreflektor 50 beweglich angeordnet ist etc..

Wie zudem aus den Figuren 1a - 1c ersichtlich, erstrecken sich der Messarm und der Referenzarm ab der zweiten Planplatte 30 im erfindungsgemäßen Interferometer parallel zueinander entlang der Messrichtung MR. Das Messstrahlenbündel M und das Referenzstrahlenbündel R propagieren demnach parallel zueinander in Richtung des Messreflektors 40 und des Referenzreflektors 50. Dies wird gewährleistet durch die optischen Wirkungen einer Reihe optischer Elemente in den Planplatten 20, 30, wie nachfolgend im Detail erläutert wird. Insbesondere aufgrund dieser Orientierung des Mess- und Referenzarms ist es möglich, Abstandsänderungen zwischen unterschiedlichsten, relativ zueinander beweglichen Maschinenteilen hochpräzise zu erfassen.

Im Folgenden werden nunmehr nacheinander die Strahlengänge im Mess- und Referenzarm des erfindungsgemäßen Interferometers zur Erzeugung des mindestens einen Abstandssignals im ersten Ausführungsbeispiel anhand der Figuren 1a - 1c, 2a - 2s sowie 3a - 3c beschrieben.

Wie in Figur 1a dargestellt, emittiert eine Lichtquelle 10, beispielsweise ein geeigneter Laser, ein Strahlenbündel S mit linearer Polarisation. Das Strahlenbündel S propagiert dabei in einer ersten Ebene, die nachfolgend als Aufspaltebene AE bezeichnet sei und mit der Zeichenebene von Figur 1a zusammenfällt. Zunächst durchläuft das Strahlenbündel S die erste transparente Planplatte 20 und propagiert weiter in Richtung der zweiten Planplatte 30. In den Figuren 3a - 3c, die jeweils Draufsichten auf die erste Seite 20_A und die zweite Seite 20_B der ersten Planplatte 20 zeigen, sind die Bereiche, in denen das Strahlenbündel S in die erste Planplatte 20 eintritt bzw. aus dieser wieder austritt mit AR bezeichnet; dort ist vorzugsweise eine antireflektierende Beschichtung aufgebracht.

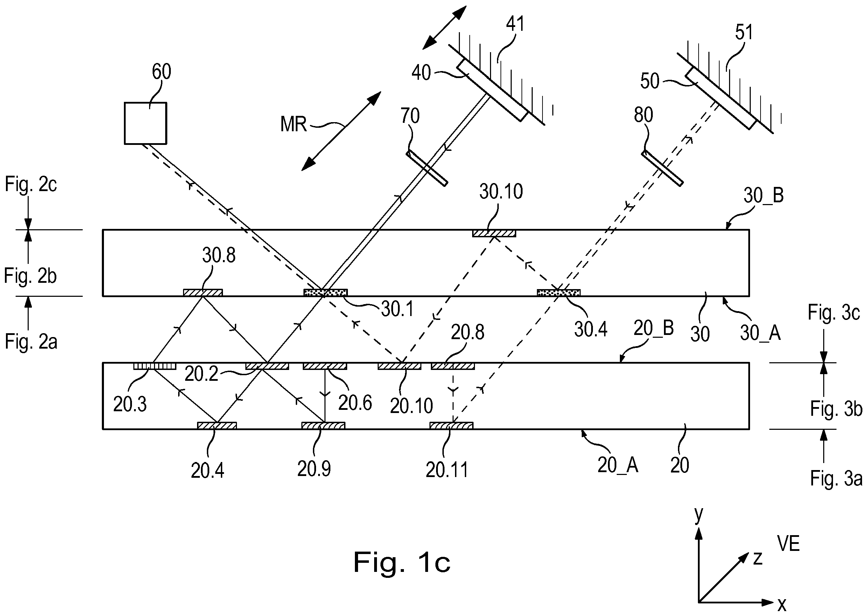

Auf der zweiten Planplatte 30 trifft das Strahlenbündel S sodann auf den ersten Strahlteiler 30.1. Dieser ist vorliegend als polarisationsoptische Strahlteilerschicht ausgebildet, die auf derjenigen Seite der zweiten Planplatte 30 angeordnet ist, die in Richtung der ersten Planplatte 20 orientiert ist; nachfolgend sei diese Seite als erste Seite 30_A der zweiten Planplatte 30 bezeichnet. Alternativ wäre grds. auch möglich, den ersten Strahlteiler 30.1 als Gitter auszubilden, das eine Gitterperiode besitzt, die kleiner als die Wellenlänge der verwendeten Lichtquelle 10 ist. Der erste Strahlteiler 30.1 spaltet das darauf einfallende Strahlenbündel S in mindestens ein Messstrahlenbündel M und mindestens ein Referenzstrahlenbündel R auf. Die aufgespaltenen Strahlenbündel M, R besitzen aufgrund des vorgesehenen Polarisationswinkels des Strahlenbündels S von ca. 45° in Bezug auf den ersten Strahlteiler 30.1 die gleiche Intensität bei der Interferenz. Beide Strahlenbündel M, R weisen jeweils eine lineare Polarisation auf, wobei die Polarisationsrichtungen im Mess- und Referenzstrahlenbündel M, R orthogonal zueinander orientiert sind. Über die aufgespaltenen Strahlenbündel M, R wird die bereits erwähnte Aufspaltebene AE aufgespannt, die identisch mit der Zeichenebene in Figur 1a ist. In den Figuren 1a - 1d ist ab der resultierenden Aufspaltung am ersten Strahlteiler 30.1 das Messstrahlenbündel M durchgezogen dargestellt, das Referenzstrahlenbündel R hingegen strichliniert. Bis zur Wiedervereinigung an einem Vereinigungsort in einer Vereinigungsebene VE, die mit der Zeichenebene der Figur 1c zusammenfällt, propagiert das Messstrahlenbündel M in einem Messarm und das Referenzstrahlenbündel R in einem Referenzarm. Die Vereinigungsebene VE ist in z-Richtung versetzt und parallel zur Aufspaltebene AE angeordnet.

Im vorliegenden Ausführungsbeispiel bildet das vom ersten Strahlteiler 30.1 durchgelassene, linear polarisierte Strahlenbündel das Messstrahlenbündel M. Das vom Strahlteiler 23 reflektierte, orthogonal hierzu linear polarisierte Strahlenbündel fungiert als Referenzstrahlenbündel R.

Im Messarm durchläuft das am ersten Strahlteiler 30.1 transmittierte, linear polarisierte Messstrahlenbündel M zunächst die zweite Planplatte 30 und propagiert nach dem Verlassen der Planplatte 30 über die zweite Seite 30_B sodann ein erstes Mal in Richtung des Messreflektors 40. Zwischen der zweiten Planplatte 30 und dem Messreflektor 40 ist eine λ/4-Platte 70 im Strahlengang des Messstrahlenbündels M angeordnet. Nach der Rückreflexion am Messreflektor 40 und dem zweiten Durchlaufen der λ/4-Platte 70 weist das Messstrahlenbündel M eine um 90° gedrehte Polarisation auf und wird vom ersten Strahlteiler 30.1 nunmehr in Richtung der zweiten Seite 30_B der zweiten Planplatte 30 reflektiert.

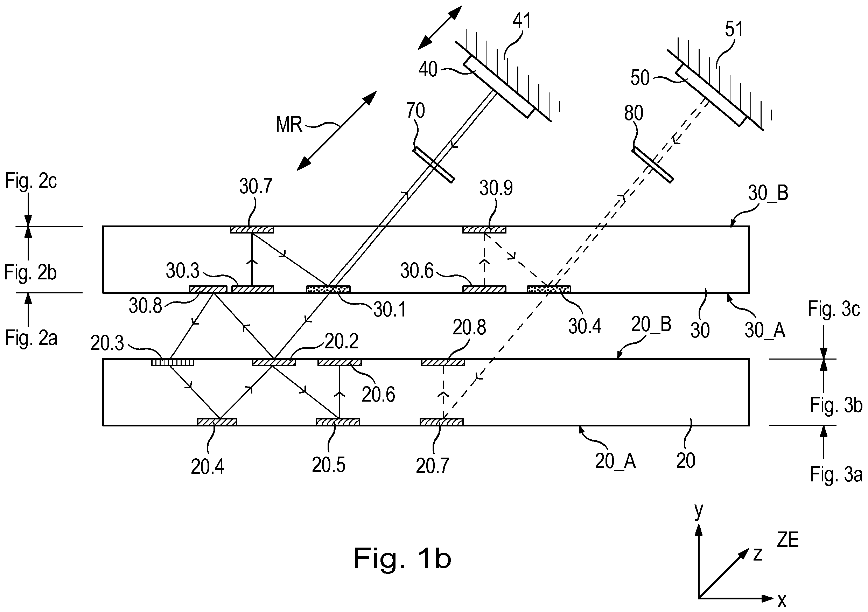

Anschließend durchläuft das Messstrahlenbündel M in der zweiten Planplatte 30 eine erste Abbildungsoptik, die durch eine erste reflektierende Gitterlinse 30.2 an der zweiten Seite 30_B, einen ersten Reflektor 30.3 an der ersten Seite 30_A und eine zweite reflektierende Gitterlinse 30.7 an der zweiten Seite 30_B der Planplatte 30 gebildet wird. Die erste Gitterlinse 30.2 in der Aufspaltebene AE besitzt hierbei eine erste Brennweite f, die zweite Gitterlinse 30.7 in der Zwischenebene ZE (Figur 1b) besitzt eine zweite Brennweite 2f, die im vorliegenden Ausführungsbeispiel doppelt so groß ist wie die erste Brennweite f. Der Abstand d zwischen den Seiten 30_A und 30_B der Planplatte 30, der der Dicke der Planplatte 30 entspricht, beträgt ferner d = (f + 2f)/2. Am Ausgang der ersten Abbildungsoptik resultiert nach der zweiten Gitterlinse 30.7 somit in der Zwischenebene ZE ein Messstrahlenbündel M mit verdoppeltem Strahldurchmesser gegenüber dem Eingangs-Strahldurchmesser. Das Messstrahlenbündel M propagiert sodann wieder in Richtung des Strahlteilers 30.1 und wird von diesem zum Messreflektor 40 hin reflektiert wird, der beim zweiten Auftreffen senkrecht beaufschlagt wird.

Die erste Abbildungsoptik in der zweiten Planplatte 30 bewirkt somit einen Versatz des Messstrahlenbündels M von der Aufspaltebene AE über den Reflektor 30.3 in die Zwischenebene ZE. Desweiteren wird darüber eine Vergrößerung des Eingangs-Strahldurchmessers des darauf einfallenden Messstrahlenbündels M bewirkt, im konkreten Beispiel resultiert mit den gewählten Brennweiten f, 2f der Gitterlinsen 30.2, 30.7 eine Verdopplung des Eingangs-Strahldurchmessers des Messstrahlenbündels M.

Gemäß der in Figur 1b veranschaulichten Strahlengangdarstellung in der Zwischenebene ZE wird nach der zweiten Reflexion des Messstrahlenbündels M am Messreflektor 40, dem zweimaligen Passieren der λ/4-Platte 70 und der darüber resultierenden erneuten Änderung seines Polarisationszustands das Messstrahlenbündel M vom ersten Strahlteiler 30.1 nunmehr transmittiert und propagiert weiter in Richtung der ersten Planplatte 20. Auf dessen zweiter Seite 20_B trifft das Messstrahlenbündel M auf einen Reflektor 20.2, von dem es in Richtung der zweiten Planplatte 30 reflektiert wird. Auf der ersten Seite 30_A der zweiten Planplatte 30 trifft das Messstrahlenbündel M dann auf einen weiteren Reflektor 30.8, über den eine erneute Reflexion in Richtung eines transmittiven Umlenkgitters 20.3 auf der zweiten Seite 20_B der ersten Planplatte 20 erfolgt. Vom Umlenkgitter 20.3 aus wird das Messstrahlenbündel M dann über zwei weitere Reflektoren 20.4, 20.2 (Reflexion nunmehr an Rückseite) zweimal reflektiert und propagiert in Richtung einer zweiten Abbildungsoptik in der ersten Planplatte 20.

Die zweite Abbildungsoptik für das Messstrahlenbündel M umfasst eine in der Zwischenebene ZE angeordnete dritte Gitterlinse 20.5 mit der Brennweite 2f, einen zweiten Reflektor 20.6 sowie eine in der Vereinigungsebene VE angeordnete vierte Gitterlinse 20.9 mit der Brennweite f. Die dritte und vierte Gitterlinse 20.5, 20.9 sind wie die erste und zweite Gitterlinse 30.2, 30.7 der ersten Abbildungsoptik als Reflexions-Gitterlinsen ausgebildet. Über die zweite Abbildungsoptik resultiert somit ein Versatz des Messstrahlenbündels M von der Zwischenebene ZE in die Vereinigungsebene VE. Desweiteren wird aufgrund der gewählten Brennweiten 2f, f der beiden Gitterlinsen 20.5, 20.9 eine Halbierung des Strahldurchmessers des Messstrahlenbündels M bewirkt, so dass dieses nach dem Passieren der vierten Gitterlinse 20.9 wieder den ursprünglichen Eingangs-Strahldurchmesser besitzt.

Wie in Figur 1c dargestellt, propagiert in der Vereinigungsebene VE das Messstrahlenbündel M dann über die Reflektoren 20.2, 20.4, das transmittive Umlenkgitter 20.3, und die Reflektoren 30.8, 20.2 in Richtung des ersten Strahlteilers 30.1. Dieser lässt das Messstrahlenbündel M transmittieren, so dass dieses ein drittes Mal in Richtung des Messreflektors 40 propagiert. Nach dem dritten Beaufschlagen des Messreflektors 40 und dem erneuten zweimaligen Durchlaufen der λ/4-Platte 70 erfährt das Messstrahlenbündel M aufgrund der erneuten Änderung seines Polarisationszustands am ersten Strahlteiler 30.1 schließlich eine Reflexion in Richtung der Detektionseinheit 60.

Der grundsätzliche Strahlengang des Messstrahlenbündels M im Messarm des ersten Ausführungsbeispiels des erfindungsgemäßen Interferometers lässt sich damit folgendermaßen zusammenfassen: Das über den ersten Strahlteiler 30.1 erzeugte Messstrahlenbündel M trifft ein erstes Mal auf den Messreflektor 40 und wird nach der ersten Rückreflexion in den beiden Planplatten 20, 30 über die erste Abbildungsoptik in der zweiten Planplatte 30 von der Aufspaltebene AE in die Zwischenebene ZE versetzt; gleichzeitig resultiert dabei eine Verdopplung des Strahldurchmessers. Das Messstrahlenbündel M gelangt dann senkrecht einfallend ein zweites Mal auf den Messreflektor 40 und wird erneut zu den beiden Planplatten 20, 30 zurückreflektiert. Über die zweite Abbildungsoptik in der ersten Planplatte 20 resultiert dann ein Versatz des Messstrahlenbündels M in die Vereinigungsebene VE. Der verdoppelte Strahldurchmesser wird dabei wieder in den ursprünglichen Eingangs-Strahldurchmesser zurück verkleinert bzw. halbiert. Das Messstrahlenbündel M trifft dann ein drittes Mal auf den Messreflektor 40, wird von diesem reflektiert und propagiert über den Strahlteiler 30.1 dann in Richtung der Detektionseinheit 60.

Über die Strahlengangführung ist im erfindungsgemäßen Interferometer gewährleistet, dass auch im Fall einer eventuellen Verkippung des Messreflektors 40 aus seiner Nominallage keine Strahlscherungen, d.h. weder Winkel- noch Ortsscherungen, im Messstrahlenbündel M resultieren. Derartige Strahlscherungen würden einen Intensitätseinbruch und Modulationsgradverlust in den erzeugten Abstandssignalen bewirken. Eventuelle Verkippungen des Messreflektors 40 werden über den vorgesehenen Strahlengang des Messstrahlenbündels M vielmehr automatisch kompensiert, da darüber gewährleistet ist, dass das Messstrahlenbündel M beim zweiten Auftreffen auf den Messreflektor 40 immer senkrecht darauf einfällt. So würde das Messstrahlenbündel M beim ersten Auftreffen auf den um einen Winkel α verkippten Messreflektor 40 um den Winkel 2α ablenkt. Über die erste Abbildungsoptik wird dabei der Strahldurchmesser verdoppelt, der Austrittswinkel aus der ersten Abbildungsoptik aber halbiert, d.h. das Messstrahlenbündel M verlässt die erste Abbildungsoptik unter dem Austrittswinkel α. Damit ist sichergestellt, dass das Messstrahlenbündel M beim zweiten Auftreffen immer senkrecht auf den Messreflektor M einfällt und nach der erfolgten Reflexion quasi auf dem Einfallsweg in sich zurückpropagieren kann.

Das am ersten Strahlteiler 30.1 erzeugte Referenzstrahlenbündel R wird in der Aufspaltebene AE gemäß der Darstellung in Figur 1a in Richtung der ersten Planplatte 20 reflektiert. Es trifft dort auf den Reflektor 20.1 auf der ersten Seite 20_A dieser Planplatte 20. Von diesem resultiert eine Rückreflexion des Referenzstrahlenbündels R in Richtung der zweiten Planplatte 30, wo das Referenzstrahlenbündel R auf einen weiteren, zweiten Strahlteiler 30.4 trifft, der auf der ersten Seite 30_A der zweiten Planplatte 30 angeordnet und ebenfalls als polarisationsoptische Strahlteilerschicht ausgebildet ist. Ab dem zweiten Strahlteiler 30.4 ist der weitere Strahlengang des Referenzstrahlenbündels R im Referenzarm prinzipiell identisch zum Strahlengang des Messstrahlenbündels M im Messarm ab dem ersten Strahlteiler 30.1. So propagiert das vom zweiten Strahlteiler 30.4 transmittierte Referenzstrahlenbündel R ein erstes Mal entlang der Messrichtung und parallel zum Messstrahlenbündel in Richtung des Referenzreflektors 50. Von diesem wird es zurückreflektiert und aufgrund des zweimaligen Passierens der λ/4-Platte 80 vom zweiten Strahlteiler 30.4 auf der zweiten Planplatte 30 in Richtung einer dritten Abbildungsoptik reflektiert. Dieser umfasst analog zur ersten Abbildungsoptik im Messarm eine fünfte Gitterlinse 30.5 in der Aufspaltebene AE, einen dritten Reflektor 30.6 sowie eine sechste Gitterlinse 30.9 in der Zwischenebene ZE (Figur 1b). Die fünfte Gitterlinse 30.5 besitzt die Brennweite f, die sechste Gitterlinse 30.9 die demgegenüber doppelte Brennweite 2f. Über diese Abbildungsoptik resultiert für das Referenzstrahlenbündel R ebenfalls ein Versatz von der Aufspaltebene AE in die Zwischenebene ZE, ferner wird der Eingangs-Strahldurchmesser des Referenzstrahlenbündels R verdoppelt.

Nach der Reflexion an der zweiten Gitterlinse 30.9 trifft das Referenzstrahlenbündel R, wie in der Strahlengangdarstellung der Zwischenebene ZE in Figur 1b gezeigt, erneut auf den zweiten Strahlteiler 30.4 und wird darüber in Richtung des Referenzreflektors 50 reflektiert, auf den es beim zweiten Auftreffen dann senkrecht einfällt. Nach der Rückreflexion und dem erneut zweimaligen Durchlaufen der λ/4-Platte 80 wird das Referenzstrahlenbündel R dann vom zweiten Strahlteiler 30.4 in Richtung der ersten Planplatte 20 durchgelassen. In der ersten Planplatte 20 trifft das Referenzstrahlenbündel R dann auf eine vierte Abbildungsoptik, bestehend aus einer siebten Gitterlinse 20.7 in der Zwischenebene ZE, einem vierten Reflektor 20.8 und einer achten Gitterlinse 20.11 in der Vereinigungsebene (Figur 1c). Die siebte Gitterlinse 20.7 besitzt die Brennweite 2f, die achte Gitterlinse 20.11 die demgegenüber halbierte Brennweite f. Darüber resultiert analog zum Strahlengang im Messarm und der dort vorgesehenen zweiten Abbildungsoptik ein Versatz des Referenzstrahlenbündels R von der Zwischenebene ZE in die Vereinigungsebene VE, während gleichzeitig der Strahldurchmesser des Referenzstrahlenbündels R wieder verkleinert bzw. halbiert wird.

Auch für das Referenzstrahlenbündel R ist somit analog zum Messstrahlenbündel M über den erläuterten Strahlengang und hier insbesondere über die optische Wirkung der dritten Abbildungsoptik gewährleistet, dass das Referenzstrahlenbündel R beim zweiten Auftreffen senkrecht auf den Referenzreflektor 50 einfällt und in sich zurückpropagiert. Unerwünschte Winkel- und Ortsscherungen zwischen dem Messstrahlenbündel M und dem Referenzstrahlenbündel R können damit vermieden werden.

Im Anschluss an die Reflexion an der achten Gitterlinse 20.11 in Richtung der zweiten Planplatte 30 propagiert das Referenzstrahlenbündel R durch den zweiten Strahlteiler 30.4 ein drittes Mal in Richtung des Referenzreflektors 50. Nach der dritten Rückreflexion und dem wiederum zweimaligen Durchlaufen der λ/4-Platte 80, wird das Referenzstrahlenbündel R am zweiten Strahlteiler 30.4 in Richtung eines weiteren Reflektors 30.10 auf der zweiten Seite 30_B der zweiten Planplatte 30 reflektiert. Von diesem Reflektor 30.10 aus wird das Referenzstrahlenbündel R in Richtung der ersten Planplatte 20 reflektiert und trifft dort auf den Reflektor 30.10, der auf der zweiten Seite 20_B der ersten Planplatte angeordnet ist. Von diesem wird das Referenzstrahlenbündel R dann schließlich in Richtung des ersten Strahlteilers 30.1 auf der zweiten Planplatte 30 umgelenkt und kommt hier am Vereinigungsort mit dem Messstrahlenbündel M zur interfrierenden Überlagerung. Das Referenzstrahlenbündel R durchläuft dabei den ersten Strahlteiler 30.1 und propagiert dann zusammen mit dem Messstrahlenbündel M interferierend in Richtung der Detektionseinheit 60.

Aufgrund der prinzipiell analogen Strahlengangführung zum Messarm ist auch für das im Referenzarm propagierende Referenzstrahlenbündel R gewährleistet, dass eventuelle Verkippungen des Referenzreflektors 50 aus seiner Nominallage keine Strahlscherungen verursachen, die die erzeugten Abstandssignale negativ beeinträchtigen.

Über die verschiedenen optischen Elemente auf Seiten der beiden Planplatten 20, 30 ist im erfindungsgemäßen Interferometer somit gewährleistet, dass durch deren erläuterte optische Wirkung auf das Messstrahlenbündel M und das Referenzstrahlenbündel R, diese jeweils parallel zueinander entlang der Messrichtung MR in Richtung des Messreflektors 40 und des Referenzreflektors 50 propagieren.

Im ersten Ausführungsbeispiel des erfindungsgemäßen Interferometers wird durch die Strahlengangführung im Referenzarm sichergestellt, dass der Messarm und der Referenzarm parallel und räumlich getrennt voneinander verlaufen, um derart die entsprechende Messaufgabe bewerkstelligen zu können. Hierzu durchläuft das Referenzstrahlenbündel R zweimal den zusätzlichen optischen Weg zwischen dem ersten Strahlteiler 30.1 über den Reflektor 20.1 zum zweiten Strahlteiler 30.4. Dies hat ohne zusätzliche Maßnahmen zur Folge, dass die vom Referenzstrahlenbündel R im Referenzarm durchlaufenen optischen Wege länger sind als diejenigen des Messstrahlenbündels M im Messarm. Im Fall von Temperaturänderungen können die unterschiedlichen optischen Weglängen im Mess- und Referenzarm Fehler in der Positionsbestimmung zur Folge haben, da das Mess- und das Referenzstrahlenbündel M, R unterschiedlich von derartigen Temperaturänderungen beeinflusst werden. Es ist daher möglich, durch die Ausbildung einer geeigneten Verzögerungsstrecke im Messarm sicherzustellen, dass das Messstrahlenbündel M im Messarm zwischen Aufspaltung und Wiedereinigung mit dem Referenzstrahlenbündel R den gleichen optischen Weg in Luft und in den Planplatten 20, 30 durchläuft wie das Referenzstrahlenbündel R. Die entsprechende Verzögerungsstrecke wird im ersten Ausführungsbeispiel des erfindungsgemäßen Interferometers durch den zusätzlich eingefügten optischen Weg des Messstrahlenbündels M zwischen den Reflektoren 20.2, 30.8, 20.3, 20.4 und 20.2. Der auf dieser Verzögerungsstrecke zurückgelegte optische Weglänge entspricht genau derjenigen optischen Weglänge im Referenzstrahlenbündel R, die durch die o.g. räumliche Trennung von Mess- und Referenzarm resultiert.

Wird hingegen bei der Auslegung eines entsprechenden Interferometers größerer Wert auf die möglichst kompakte Ausbildung desselbigen als auf die Kompensation thermisch bedingter Fehler gelegt, so kann auf das Vorsehen einer derartigen Verzögerungsstrecke im Messarm auch verzichtet werden; die Verzögerungsstrecke ist demnach nicht zwingend im erfindungsgemäßen Interferometer erforderlich.

Nach der Wiedervereinigung am Vereinigungsort, d.h. am ersten Strahlteiler 30.1, propagieren die interferierenden Mess- und Referenzstrahlenbündel M, R in Richtung der Detektionseinheit 60. Über die Detektionseinheit 60 ist mindestens ein erstes Abstandssignal aus wieder überlagerten und interferierenden Mess- und Referenzstrahlenbündeln M, R bezüglich der Position des Messobjekts 41 erfassbar.

In Bezug auf die Ausbildung der Detektionseinheit 60 gibt es verschiedene bekannte Möglichkeiten, die nachfolgend lediglich kurz angedeutet werden.

So kann in einer ersten Variante die Detektionseinheit 60 eingangsseitig eine λ/4-Platte umfassen; dieser ist ein Aufspaltgitter nachgeordnet, das das darauf einfallende Licht in drei Strahlenbündel gleicher Intensität aufspaltet. In den Strahlengängen dieser aufgespaltenen Strahlenbündel ist jeweils ein Polarisationsfilter angeordnet, wobei deren Polarisationsrichtungen um jeweils 120° verdreht zueinander sind. Den Polarisationsfiltern ist wiederum jeweils ein elektrooptisches Detektorelement nachgeordnet. An diesen resultieren schließlich drei um 120° phasenverschobene Abstandssignale, die von der jeweiligen Folgeelektronik weiterverarbeitbar sind.

Daneben können natürlich auch noch andere Varianten von Detektionseinheiten 60 zur Erzeugung mehrerer phasenverschobener Abstandssignale aus zwei kollinear überlagerten, orthogonal polarisierten Teilstrahlenbündeln zum Einsatz kommen.

Nicht in den Figuren 1a - 1d dargestellt ist aus Gründen der besseren Übersichtlichkeit ein Abstandshalter, der vorzugsweise zwischen den beiden Planplatten 20, 30 angeordnet wird und über den ein definierter Abstand zwischen den Planplatten 20, 30 sichergestellt wird. Als Abstandshalter eignet sich etwa eine transparente Glasplatte mit einer Dicke, die dem erforderlichen Abstand zwischen den beiden Planplatten 20, 30 entspricht, z.B. aus Zerodur. Die Glasplatte weist vorzugsweise in denjenigen Bereichen Ausnehmungen auf, in denen die Mess- und Referenzstrahlenbündel M, R zwischen den beiden Planplatten 20, 30 propagieren.

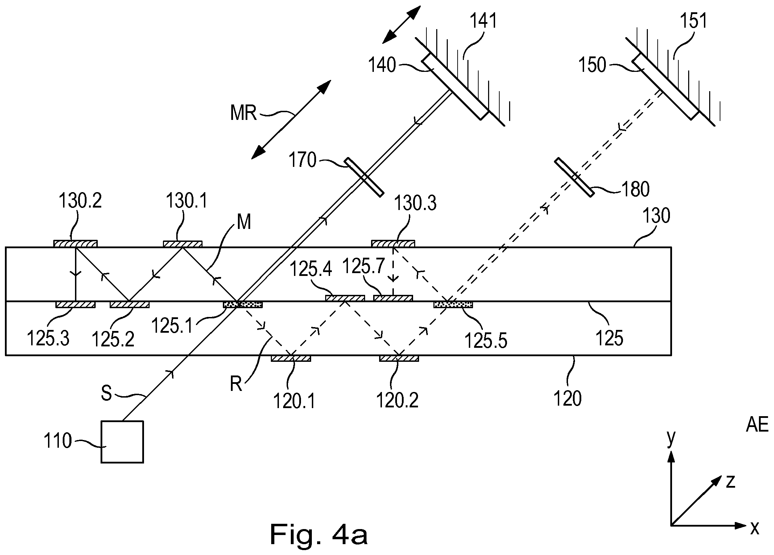

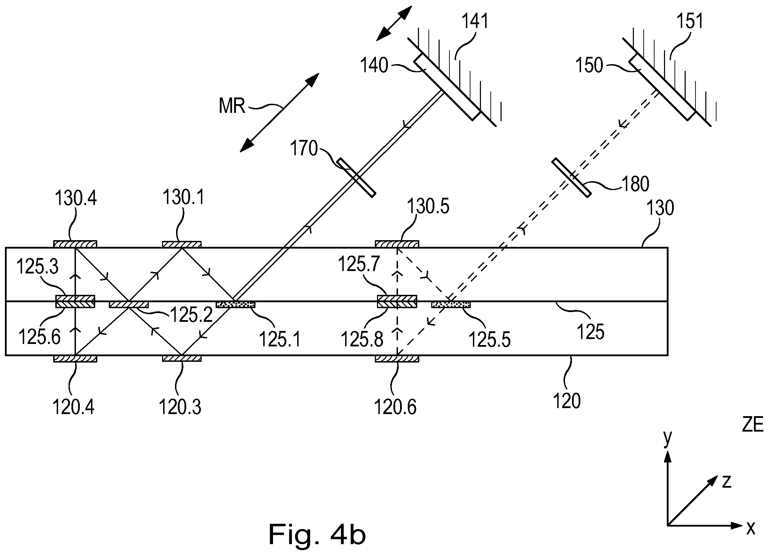

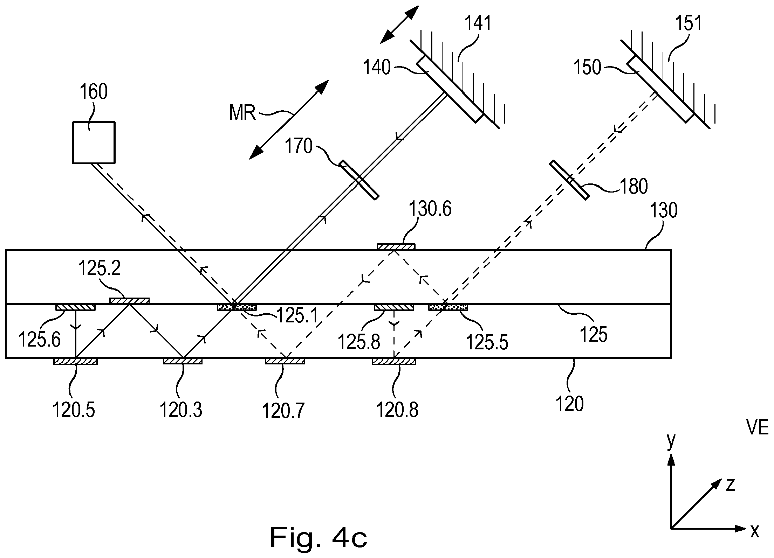

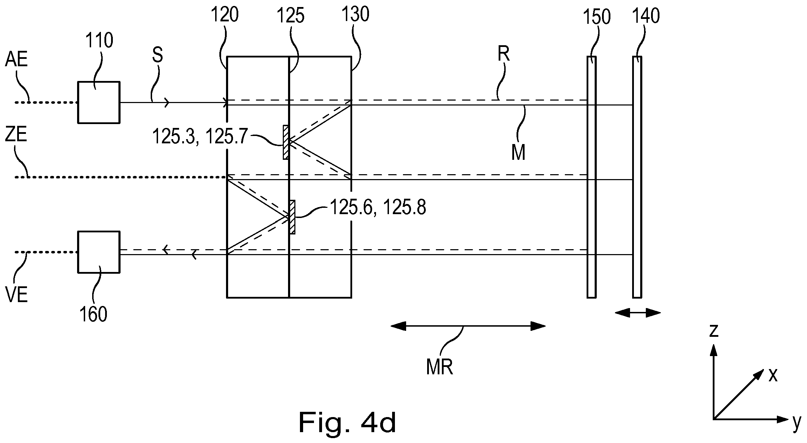

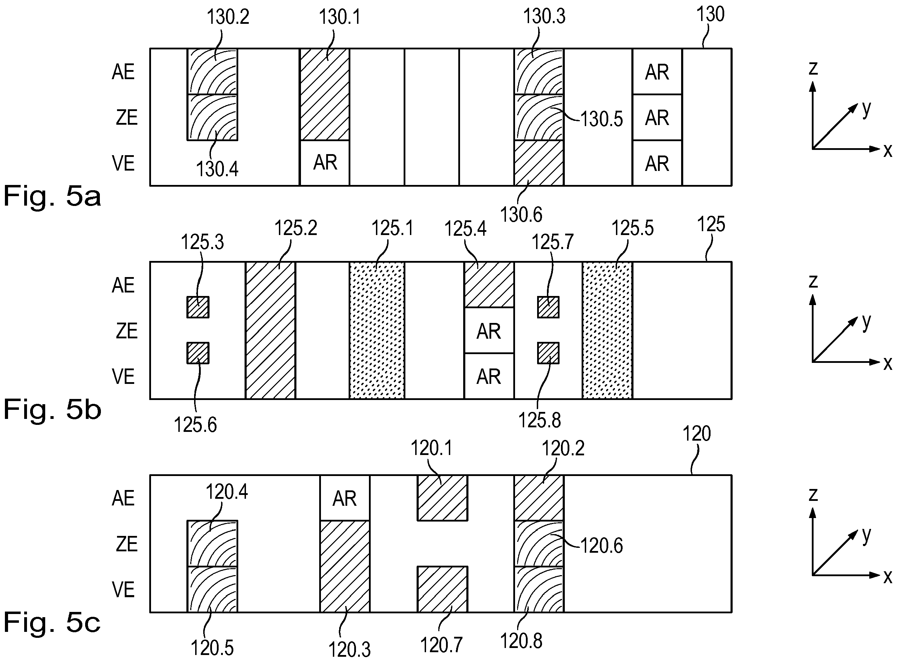

Nachfolgend wird anhand der Figuren 4a - 4d und 5a - 5c ein zweites Ausführungsbeispiel des erfindungsgemäßen Interferometers erläutert. Die Die Darstellungen der Strahlengänge in diesen Figuren entsprechen der Darstellungssystematik des ersten Ausführungsbeispiels. Beschrieben werden im Anschluss primär die maßgeblichen Unterschiede zum ersten Ausführungsbeispiel.

Der entscheidende Unterschied besteht hierbei i.w. darin, dass beim zweiten Ausführungsbeispiel nicht zwei transparente Planplatten mit einer Dicke im Bereich von 1 - 2 cm sondern stattdessen drei sehr dünne Planplatten 120, 125, 130 verwendet werden. Diese werden im folgenden als erste Planplatte 120, zweite Planplatte 125 und dritte Planplatte 130 bezeichnet. Als besonderer Vorteil einer derartigen Ausführungsform ist anzuführen, dass die vorgesehenen Planplatten 120, 125, 130 auf dünnen Glassubstraten z.B. mit Hilfe einer Halbleiter-Lithographiemaschine besonders ökonomisch hergestellt werden können. Ferner kann damit eine geringere Dicke der Planplatten-Anordnung realisiert werden, was ggf. im Fall eines geforderten kompakten Aufbaus vorteilhaft sein kann.

Die Dicke derartiger dünner Planplatten 120, 125, 130 liegt vorzugsweise im Bereich von 0.5 - 3 mm; die Abmessungen der dünnen Planplatten 120, 125, 130 entlang der x- und y-Richtung entsprechen den Abmessungen der Planplatten 20, 30 aus dem ersten Ausführungsbeispiel.

Wie im ersten Ausführungsbeispiel erweist sich auch hier vorteilhaft, wenn zwischen den drei Planplatten 120, 125, 130 Abstandshalter angeordnet werden, die im Bereich der zwischen den Planplatten 120, 125, 130 propagierenden Strahlenbündel entsprechende Ausnehmungen besitzen. Diese Abstandshalter sind in den Figuren 4a - 4d wiederum aus Übersichtlichkeitsgründen nicht dargestellt.

Die Strahlengänge des von der Lichtquelle 110 emittierten Strahlenbündels S, die Strahlengänge des Mess- und Referenzstrahlenbündels M, R im Mess- und Referenzarm sowie der Strahlengang nach der Wiedervereinigung entsprechen prinzipiell den Strahlengängen aus dem ersten Ausführungsbeispiel. Anstelle einer nochmaligen detaillierten Erläuterung derselbigen werden daher nachfolgend lediglich die Strahlengänge im Mess- und Referenzarm zwischen Aufspaltung und Wiedervereinigung in Form von Lichtlaufplänen skizziert; die hierbei verwendeten Bezugszeichen finden sich in den Figuren 4a - 4d sowie 5a - 5c.

### Strahlengang des Messstrahlenbündels M im Messarm

Erster Strahlteiler 125.1 → λ/4-Platte 170 → Messreflektor 140 (erste Reflexion) → λ/4-Platte 170 → erster Strahlteiler 125.1 (Reflexion) → Reflektor 130.1 → Reflektor 125.2 (Reflexion an Oberseite) → erste Abbildungsoptik, bestehend aus erster Gitterlinse 130.2 mit Brennweite f (in Aufspaltebene AE), erstem Reflektor 125.3, zweiter Gitterlinse 130.4 mit Brennweite 2f (in Zwischenebene ZE) → Reflektor 125.2 (Reflexion an Oberseite) → Reflektor 130.1 → erster Strahlteiler 125.1 (Reflexion) → λ/4-Platte 170 → Messreflektor 140 (zweite Reflexion, senkrechter Einfall) → λ/4-Platte 170 → erster Strahlteiler 125.1 (Transmission) → Reflektor 120.3 → Reflektor 125.2 (Reflexion an Unterseite) → zweite Abbildungsoptik, bestehend aus dritter Gitterlinse 120.4 mit Brennweite 2f (in Zwischenebene ZE), zweitem Reflektor 125.6, vierter Gitterlinse 120.5 mit Brennweite f (in Vereinigungsebene VE) → Reflektor 125.2 (Reflexion an Unterseite) → Reflektor 120.3 → erster Strahlteiler 125.1 (Transmission) → λ/4-Platte 170 → Messreflektor 140 (dritte Reflexion) → λ/4-Platte 170 → erster Strahlteiler 125.1

### Strahlengang des Referenzstrahlenbündels R im Referenzarm

Erster Strahlteiler 125.1 → Reflektor 120.1 → Reflektor 125.4 → Reflektor 120.2 → zweiter Strahlteiler 125.5 (Transmission) → λ/4-Platte 180 → Referenzreflektor 150 (erste Reflexion) → λ/4-Platte 180 → zweiter Strahlteiler 125.5 (Reflexion) → dritte Abbildungsoptik, bestehend aus fünfter Gitterlinse 130.3 mit Brennweite f (in Aufspaltebene AE), drittem Reflektor 125.7, sechster Gitterlinse 130.5 mit Brennweite 2f (in Zwischenebene ZE) → zweiter Strahlteiler 125.5 (Reflexion) → λ/4-Platte 180 → Referenzreflektor 150 (zweite Reflexion, senkrechter Einfall) → λ/4-Platte 180 → zweiter Strahlteiler 125.5 (Transmission) → vierte Abbildungsoptik, bestehend aus siebter Gitterlinse 120.6 mit Brennweite 2f (in Zwischenebene ZE), viertem Reflektor 125.8, achter Gitterlinse 120.8 mit Brennweite 2f (in Vereinigungsebene VE) → zweiter Strahlteiler 125.5 (Transmission) → λ/4-Platte 180 → Referenzreflektor 150 (dritte Reflexion) → λ/4-Platte 150 → zweiter Strahlteiler 125.5 (Reflexion) → Reflektor 130.6 → Reflektor 120.7 → erster Strahlteiler 125.1

Die optischen Wirkungen der verschiedenen Abbildungsoptiken auf das Messstrahlenbündel M und das Referenzstrahlenbündel R entsprechen den optischen Wirkungen der jeweils analogen Abbildungsoptiken aus dem ersten Ausführungsbeispiel. Auch in diesem Ausführungsbeispiel ist somit die intrinsische Kompensation von eventuellen Verkippungen des Mess- und/oder Referenzreflektors gewährleistet.

Neben den beiden erläuterten Ausführungsbeispielen gibt es im Rahmen der vorliegenden Erfindung selbstverständlich noch weitere Ausführungsmöglichkeiten.

So kann etwa auch eine Mischform des erfindungsgemäßen Interferometers aus dem ersten und zweiten Ausführungsbeispiel realisiert werden. Dabei werden z.B. vier dünne Planplatten verwendet, die analog zum Aufbau des ersten Ausführungsbeispiels in den Ebenen angeordnet werden, wo dort die Grenzflächen Glas-Luft bzw. Luft-Glas der beiden dickeren Planplatten liegen usw..

## Patentansprüche

1. Interferometer mit
- einer Lichtquelle (10; 110),
- einem ersten Strahlteiler (30.1; 125.1), der ein von der Lichtquelle (10; 110) emittiertes Strahlenbündel (S) in mindestens ein Messstrahlenbündel (M) und mindestens ein Referenzstrahlenbündel (R) aufspaltet, über die eine Aufspaltebene (AE) aufgespannt ist und wobei bis zur Wiedervereinigung an einem Vereinigungsort in einer Vereinigungsebene (VE) das Messstrahlenbündel (M) in einem Messarm und das Referenzstrahlenbündel (R) in einem Referenzarm propagiert, wobei die Vereinigungsebene (VE) parallel zur Aufspaltebene (AE) orientiert ist,
- einem Referenzreflektor (50; 150) der im Referenzarm angeordnet ist, wobei das Referenzstrahlenbündel (R) mindestens dreimal auf den Referenzreflektor (50; 150) einfällt,
- einem Messreflektor (40; 140), der im Messarm angeordnet und mit einem Messobjekt (41; 141) verbindbar ist, wobei das Messstrahlenbündel (M) mindestens dreimal auf den Messreflektor (40; 140) einfällt,
- einer Detektionseinheit (60; 160), über die mindestens ein Abstandssignal aus den am Vereinigungsort überlagerten, interferierenden Mess- und Referenzstrahlenbündeln (M, R) bezüglich der Position des Messobjekts (41; 141) erfassbar ist,
- mindestens zwei transparenten Planplatten (20, 30; 120, 125, 130), die in Strahlausbreitungsrichtung hintereinander und parallel zueinander im Strahlengang zwischen der Lichtquelle (10; 110) und der Detektionseinheit (60; 160) aufeinanderfolgend hintereinander angeordnet sind, wobei mindestens der Messreflektor (40; 140) gegenüber den Planplatten (20, 30; 120, 125, 130) und dem Referenzreflektor (50; 150) entlang einer Messrichtung (MR) beweglich ist, wobei die Messrichtung (MR) der Strahlausbreitungsrichtung zwischen den Planplatten (20, 30) und dem Messreflektor (40; 140) entspricht und die Planplatten (20, 30; 120, 125, 130) jeweils mehrere optische Elemente umfassen, die eine derartige optische Wirkung auf das Messstrahlenbündel (M) und das Referenzstrahlenbündel (R) ausüben, dass das Messstrahlenbündel (M) und das Referenzstrahlenbündel (R) jeweils parallel zueinander in Richtung des Mess- und Referenzreflektors propagieren (40, 40; 140, 150) und
- wobei in den beiden Planplatten (20, 30; 120, 125, 130) als optische Elemente mehrere Reflektoren und mindestens vier Abbildungsoptiken für das Messstrahlenbündel (M) und das Referenzstrahlenbündel (R) ausgebildet sind und
- wobei über zwei der mindestens vier Abbildungsoptiken jeweils ein Versatz des Messstrahlenbündels (M) und des Referenzstrahlenbündels (R) aus der Aufspaltebene (AE) in eine Zwischenebene (ZE) resultiert, die zwischen der Aufspaltebene (AE) und der Vereinigungsebene (VE) angeordnet und parallel zu diesen orientiert ist und
- wobei über zwei weitere der mindestens vier Abbildungsoptiken jeweils ein Versatz des Messstrahlenbündels (M) und des Referenzstrahlenbündels (R) aus der Zwischenebene (ZE) in die Vereinigungsebene (VE) resultiert.

2. Interferometer nach Anspruch 1 mit zwei Planplatten, wobei
- in der zweiten Planplatte (30) eine erste Abbildungsoptik für das Messstrahlenbündel (M) angeordnet ist,
- in der ersten Planplatte (20) eine zweite Abbildungsoptik für das Messstrahlenbündel (M) angeordnet ist,
- in der zweiten Planplatte (30) eine dritte Abbildungsoptik für das Referenzstrahlenbündel (M) angeordnet ist und
- in der ersten Planplatte (20) eine vierte Abbildungsoptik für das Referenzstrahlenbündel (M) angeordnet ist und
- über die erste und dritte Abbildungsoptik ferner eine Vergrößerung des Eingangs-Strahldurchmessers des darauf einfallenden Strahlenbündels resultiert und
- über die zweite und vierte Abbildungsoptik ferner eine Verkleinerung des Strahldurchmessers des darauf einfallenden Strahlenbündels auf den Eingangs-Strahldurchmesser resultiert.

3. Interferometer nach Anspruch 2, wobei die Abbildungsoptiken jeweils zwei auf einer Seite einer Planplatte (20, 30) angeordnete reflektive Gitterlinsen (30.2, 30.7, 20.5, 20.9, 30.5, 30.9, 20.7, 20.11) und einen auf der gegenüberliegenden Seite der Planplatte (20, 30) angeordneten Reflektor (30.3, 20.6, 30.6, 20.8) umfassen, wobei die reflektierenden Seiten der Gitterlinsen (30.2, 30.7, 20.5, 20.9, 30.5, 30.9, 20.7, 20.11) und des Reflektors (30.3, 20.6, 30.6, 20.8) einander zugewandt sind.

4. Interferometer nach Anspruch 3, wobei
- die erste Abbildungsoptik
- eine erste Gitterlinse (30.2) und eine zweite Gitterlinse (30.7) aufweist, die beide auf einer Seite (30_B) der zweiten Planplatte (30) angeordnet sind und
- einen auf der gegenüberliegenden Seite (30_A) der zweiten Planplatte (30) angeordneten ersten Reflektor (30.3) aufweist, wobei
- über die erste Abbildungsoptik eine Verdopplung des Eingangs-Strahldurchmessers des darauf einfallenden Messstrahlenbündels (M) resultiert, und
- die zweite Abbildungsoptik
- eine dritte Gitterlinse (20.5) und eine vierte Gitterlinse (20.9) aufweist, die beide auf einer Seite (20_A) der ersten Planplatte (20) angeordnet sind und
- einen auf der gegenüberliegenden Seite (20_B) der ersten Planplatte (20) angeordneten zweiten Reflektor (20.6) aufweist, wobei
- über die zweite Abbildungsoptik eine Halbierung des Strahldurchmessers des darauf einfallenden Messstrahlenbündels (M) resultiert und
- die dritte Abbildungsoptik
- eine fünfte Gitterlinse (30.5) und eine sechste Gitterlinse (30.9) aufweist, die beide auf einer Seite (30_B) der zweiten Planplatte (30) angeordnet sind und
- einen auf der gegenüberliegenden Seite (30_A) der zweiten Planplatte (30) angeordneten dritten Reflektor (30.6) aufweist, wobei
- über die dritte Abbildungsoptik eine Verdopplung des Eingangs-Strahldurchmessers des darauf einfallenden Referenzstrahlenbündels (R) resultiert, und
- die vierte Abbildungsoptik
- eine siebte Gitterlinse (20.7) und eine achte Gitterlinse (20.11) aufweist, die beide auf einer Seite (20_A) der ersten Planplatte (20) angeordnet sind und
- einen auf der gegenüberliegenden Seite (20_B) der ersten Planplatte (20) angeordneten vierten Reflektor (20.8) aufweist, wobei
- über die vierten Abbildungsoptik eine Halbierung des Strahldurchmessers des darauf einfallenden Referenzstrahlenbündels (R) resultiert.

5. Interferometer nach Anspruch 4, wobei die erste, vierte, fünfte und achte Gitterlinse (30.2, 20.9, 30.5, 20.11) jeweils eine erste Brennweite (f) besitzt und die zweite, dritte, sechste und siebte Gitterlinse (30.7, 20.5, 30.9, 20.7) jeweils eine zweite Brennweite (2f) besitzt, die doppelt so groß ist wie die erste Brennweite (f).

6. Interferometer nach Anspruch 1 mit drei in Strahlausbreitungsrichtung beabstandet angeordneten Planplatten, wobei
- in der zweiten und dritten Planplatte (125, 130) eine erste Abbildungsoptik für das Messstrahlenbündel (M) ausgebildet ist,
- in der zweiten und dritten Planplatte (125, 130) eine zweite Abbildungsoptik für das Messstrahlenbündel (M) ausgebildet ist,
- in der ersten und zweiten Planplatte (120, 125) eine dritte Abbildungsoptik für das Referenzstrahlenbündel (R) ausgebildet ist und
- in der ersten und zweiten Planplatte (120, 125) eine vierte Abbildungsoptik für das Referenzstrahlenbündel (R) ausgebildet ist und
- über die erste und dritte Abbildungsoptik ferner eine Vergrößerung des Eingangs-Strahldurchmessers des darauf einfallenden Strahlenbündels resultiert und
- über die zweite und vierte Abbildungsoptik ferner eine Verkleinerung des Strahldurchmessers des darauf einfallenden Strahlenbündels auf den Eingangs-Strahldurchmesser resultiert.

7. Interferometer nach Anspruch 6, wobei die Abbildungsoptiken jeweils zwei auf einer Planplatte (120, 130) angeordnete reflektive Gitterlinsen (130.2, 130.4, 120.4, 120.5, 130.3, 130.5, 120.6, 120.8) und einen auf der gegenüberliegenden Planplatte (125) angeordneten Reflektor (130.3, 120.6, 130.6, 120.8) umfassen, wobei die reflektierenden Seiten der Gitterlinsen (130.2, 130.4, 120.4, 120.5, 130.3, 130.5, 120.6, 120.8) und des Reflektors (130.3, 120.6, 130.6, 120.8) einander zugewandt sind.

8. Interferometer nach Anspruch 7, wobei
- die erste Abbildungsoptik
- eine erste Gitterlinse (130.2) und eine zweite Gitterlinse (130.4) aufweist, die beide auf der dritten Planplatte (130) angeordnet sind und
- einen auf der zweiten Planplatte (125) angeordneten ersten Reflektor (125.3) aufweist, wobei
- über die erste Abbildungsoptik eine Verdopplung des Eingangs-Strahldurchmessers des darauf einfallenden Messstrahlenbündels (M) resultiert, und
- die zweite Abbildungsoptik
- eine dritte Gitterlinse (120.4) und eine vierte Gitterlinse (120.5) aufweist, die beide auf der ersten Planplatte (120) angeordnet sind und
- einen auf der zweiten Planplatte (125) angeordneten zweiten Reflektor (125.6) aufweist, wobei
- über die zweite Abbildungsoptik eine Halbierung des Strahldurchmessers des darauf einfallenden Messstrahlenbündels (M) resultiert und
- die dritte Abbildungsoptik
- eine fünfte Gitterlinse (130.3) und eine sechste Gitterlinse (130.5) aufweist, die beide auf der dritten Planplatte (130) angeordnet sind und
- einen auf der zweiten Planplatte (125) angeordneten dritten Reflektor (125.7) aufweist, wobei
- über die dritte Abbildungsoptik eine Verdopplung des Eingangs-Strahldurchmessers des darauf einfallenden Referenzstrahlenbündels (R) resultiert, und
- die vierte Abbildungsoptik
- eine siebte Gitterlinse (120.6) und eine achte Gitterlinse (120.8) aufweist, die beide auf der ersten Planplatte (120) angeordnet sind und
- einen auf der zweiten Planplatte (125) angeordneten vierten Reflektor (125.8) aufweist, wobei
- über die vierte Abbildungsoptik eine Halbierung des Strahldurchmessers des darauf einfallenden Referenzstrahlenbündels (R) resultiert.

9. Interferometer nach Anspruch 8, wobei die erste, vierte, fünfte und achte Gitterlinse (130.2, 120.5, 130.3, 120.8) jeweils eine erste Brennweite (f) besitzt und die zweite, dritte, sechste und siebte Gitterlinse (130.4, 120.4,130.5, 120.6) jeweils eine zweite Brennweite (2f) besitzt, die doppelt so groß ist wie die erste Brennweite (f).

10. Interferometer nach mindestens einem der vorhergehenden Ansprüche, wobei der erste Strahlteiler (30.1; 125.1) auf der zweiten Planplatte (30; 130) als Gitter oder als polarisationsoptische Strahlteilerschicht ausgebildet sind, die jeweils auf einer Seite (30_A) der zweiten Planplatte (30; 125) angeordnet sind, die in Richtung der ersten Planplatte (20; 120) orientiert ist.

11. Interferometer nach mindestens einem der vorhergehenden Ansprüche, wobei der Messreflektor (40; 140) und der Referenzreflektor (50; 150) jeweils als Planspiegelreflektor ausgebildet sind.

12. Interferometer nach mindestens einem der vorhergehenden Ansprüche, wobei im Strahlengang des Messstrahlenbündels (M) eine Verzögerungsstrecke derart ausgebildet ist, dass das Messstrahlenbündel (M) und das Referenzstrahlenbündel (R) zwischen Aufspaltung und Wiedervereinigung identische optische Wege in Luft und in den Planplatten (20, 30) durchlaufen.

13. Interferometer nach mindestens einem der vorhergehenden Ansprüche, wobei
- das Messstrahlenbündel (M) beim zweiten Auftreffen senkrecht auf den Messreflektor (40; 140) einfällt und
- das Referenzstrahlenbündel (R) beim zweiten Auftreffen senkrecht auf den Referenzreflektor (50; 150) einfällt.

14. Interferometer nach mindestens einem der vorhergehenden Ansprüche, wobei zwischen den Planplatten Abstandshalter angeordnet sind, die Ausnehmungen im Bereich der zwischen den Planplatten propagierenden Mess- und Referenzstrahlenbündel aufweisen.

## Claims

1. Interferometer comprising
- a light source (10; 110),
- a first beam splitter (30.1; 125.1), which splits a beam (S) emitted by the light source (10; 110) into at least one measurement beam (M) and at least one reference beam (R), which span a splitting plane (AE) and wherein, up to unification at a unification location in a unification plane (VE), the measurement beam (M) propagates in a measurement arm and the reference beam (R) propagates in a reference arm, wherein the unification plane (VE) is oriented parallel to the splitting beam (AE),
- a reference reflector (50; 150) arranged in the reference arm, wherein the reference beam (R) strikes the reference reflector (50; 150) at least three times,
- a measurement reflector (40; 140) arranged in the measurement arm and connectable to a measured object (41; 141), wherein the measurement beam (M) strikes the measurement reflector (40; 140) at least three times,
- a detection unit (60; 160), which renders capturable at least one distance signal in respect of the position of the measured object (41; 141) from the interfering measurement and reference beams (M, R) that are superimposed at the unification location,
- at least two transparent plane plates (20, 30; 120, 125, 130), which are arranged successively in the beam propagation direction and parallel to one another in successive sequential fashion in the beam path between the light source (10; 110) and the detection unit (60; 160), wherein at least the measurement reflector (40; 140) is movable in relation to the plane plates (20, 30; 120, 125, 130) and the reference reflector (50; 150) along a measurement direction (MR), wherein the measurement direction (MR) corresponds to the beam propagation direction between the plane plates (20, 30) and the measurement reflector (40; 140) and the plane plates (20, 30; 120, 125, 130) each comprise a plurality of optical elements which exert such an optical effect on the measurement beam (M) and the reference beam (R) that the measurement beam (M) and the reference beam (R) each propagate parallel to one another along the direction of the measurement and reference reflector (40, 40; 140, 150) and
- wherein a plurality of reflectors and at least four imaging optical units for the measurement beam (M) and the reference beam (R) are embodied in the two plane plates (20, 30; 120, 125, 130) as optical elements and
- wherein an offset of the measurement beam (M) and of the reference beam (R) from the splitting plane (AE) into an intermediate plane (ZE) results in each case via two of the at least four imaging optical units, said intermediate plane being arranged between the splitting plane (AE) and the unification plane (VE) and being arranged parallel to these, and
- wherein an offset of the measurement beam (M) and of the reference beam (R) from the intermediate plane (ZE) into the unification plane (VE) results in each case via a further two of the at least four imaging optical units.

2. Interferometer according to Claim 1, comprising two plane plates, wherein
- a first imaging optical unit for the measurement beam (M) is arranged in the second plane plate (30),
- a second imaging optical unit for the measurement beam (M) is arranged in the first plane plate (20),
- a third imaging optical unit for the reference beam (M) is arranged in the second plane plate (30) and
- a fourth imaging optical unit for the reference beam (M) is arranged in the first plane plate (20), and
- the input beam diameter of the beam incident thereon further increases by the first and third imaging optical unit and
- the beam diameter of the beam incident thereon further decreases to the input beam diameter by the second and the fourth imaging optical unit.

3. Interferometer according to Claim 2, wherein the imaging optical units each comprise two reflective grating lenses (30.2, 30.7, 20.5, 20.9, 30.5, 30.9, 20.7, 20.11) arranged on one side of a plane plate (20, 30) and a reflector (30.3, 20.6, 30.6, 20.8) arranged on the opposite side of the plane plate (20, 30), wherein the reflective sides of the grating lenses (30.2, 30.7, 20.5, 20.9, 30.5, 30.9, 20.7, 20.11) and of the reflector (30.3, 20.6, 30.6, 20.8) face one another.

4. Interferometer according to Claim 3, wherein
- the first imaging optical unit
- has a first grating lens (30.2) and a second grating lens (30.7), which are both arranged on one side (30_B) of the second plane plate (30), and
- has a first reflector (30.3) arranged on the opposite side (30_A) of the second plane plate (30), wherein
- the input beam diameter of the measurement beam (M) incident thereon is doubled by the first imaging optical unit, and
- the second imaging optical unit
- has a third grating lens (20.5) and a fourth grating lens (20.9), which are both arranged on one side (20_A) of the first plane plate (20), and
- has a second reflector (20.6) arranged on the opposite side (20_B) of the first plane plate (20), wherein
- the beam diameter of the measurement beam (M) incident thereon is halved by the second imaging optical unit, and
- the third imaging optical unit
- has a fifth grating lens (30.5) and a sixth grating lens (30.9), which are both arranged on one side (30_B) of the second plane plate (30), and
- has a third reflector (30.6) arranged on the opposite side (30_A) of the second plane plate (30), wherein
- the input beam diameter of the reference beam (R) incident thereon is doubled by the third imaging optical unit, and
- the fourth imaging optical unit
- has a seventh grating lens (20.7) and an eighth grating lens (20.11), which are both arranged on one side (20_A) of the first plane plate (20), and
- has a fourth reflector (20.8) arranged on the opposite side (20_B) of the first plane plate (20), wherein
- the beam diameter of the reference beam (R) incident thereon is halved by the fourth imaging optical unit.

5. Interferometer according to Claim 4, wherein the first, fourth, fifth and eighth grating lenses (30.2, 20.9, 30.5, 20.11) each have a first focal length (f) and the second, third, sixth and seventh grating lenses (30.7, 20.5, 30.9, 20.7) each have a second focal length (2f), which is twice as long as the first focal length (f).

6. Interferometer according to Claim 1, comprising three plane plates arranged spaced apart in the beam propagation direction, wherein
- a first imaging optical unit for the measurement beam (M) is formed in the second and third plane plate (125, 130),
- a second imaging optical unit for the measurement beam (M) is formed in the second and third plane plate (125, 130),
- a third imaging optical unit for the reference beam (R) is formed in the first and second plane plate (120, 125) and
- a fourth imaging optical unit for the reference beam (R) is formed in the first and second plane plate (120, 125), and
- the input beam diameter of the beam incident thereon further increases by the first and third imaging optical unit and
- the beam diameter of the beam incident thereon further decreases to the input beam diameter by the second and the fourth imaging optical unit.

7. Interferometer according to Claim 6, wherein the imaging optical units each comprise two reflective grating lenses (130.2, 130.4, 120.4, 120.5, 130.3, 130.5, 120.6, 120.8) arranged on a plane plate (120, 130) and a reflector (130.3, 120.6, 130.6, 120.8) arranged on the opposite plane plate (125), wherein the reflective sides of the grating lenses (130.2, 130.4, 120.4, 120.5, 130.3, 130.5, 120.6, 120.8) and of the reflector (130.3, 120.6, 130.6, 120.8) face one another.

8. Interferometer according to Claim 7, wherein
- the first imaging optical unit
- has a first grating lens (130.2) and a second grating lens (130.4), which are both arranged on the third plane plate (1 30), and
- has a first reflector (125.3) arranged on the second plane plate (125), wherein
- the input beam diameter of the measurement beam (M) incident thereon is doubled by the first imaging optical unit, and
- the second imaging optical unit
- has a third grating lens (120.4) and a fourth grating lens (120.5), which are both arranged on the first plane plate (120), and
- has a second reflector (125.6) arranged on the second plane plate (125), wherein
- the beam diameter of the measurement beam (M) incident thereon is halved by the second imaging optical unit, and
- the third imaging optical unit
- has a fifth grating lens (130.3) and a sixth grating lens (130.5), which are both arranged on the third plane plate (130), and
- has a third reflector (125.7) arranged on the second plane plate (125), wherein
- the input beam diameter of the reference beam (R) incident thereon is doubled by the third imaging optical unit, and
- the fourth imaging optical unit
- has a seventh grating lens (120.6) and an eighth grating lens (120.8), which are both arranged on the first plane plate (120), and
- has a fourth reflector (125.8) arranged on the second plane plate (125), wherein
- the beam diameter of the reference beam (R) incident thereon is halved by the fourth imaging optical unit.

9. interferometer according to Claim 8, wherein the first, fourth, fifth and eighth grating lenses (130.2, 120.5, 130.3, 120.8) each have a first focal length (f) and the second, third, sixth and seventh grating lenses (130.4, 120.4, 130.5, 120.6) each have a second focal length (2f), which is twice as long as the first focal length (f).

10. interferometer according to at least one of the preceding claims, wherein the first beam splitter (30.1; 125.1) on the second plane plate (30; 130) is embodied as a grating or as a polarization-optical beam splitter layer, which is respectively arranged on a side (30_A) of the second plane plate (30; 125) oriented in the direction of the first plane plate (20; 120).

11. interferometer according to at least one of the preceding claims, wherein the measurement reflector (40; 140) and the reference reflector (50; 150) are each embodied as a plane mirror reflector.

12. Interferometer according to at least one of the preceding claims, wherein a delay path is formed in the beam path of the measurement beam (M) in such a way that the measurement beam (M) and the reference beam (R) pass over identical optical paths in air and in the plane plates (20, 30) between split and reunification.

13. Interferometer according to at least one of the preceding claims, wherein
- the measurement beam (M) is incident in perpendicular fashion on the measurement reflector (40; 140) in the case of the second strike and
- the reference beam (R) is incident in perpendicular fashion on the reference reflector (50; 150) in the case of the second strike.

14. Interferometer according to at least one of the preceding claims, wherein spacers are arranged between the plane plates, said spacers having cutouts in the region of the measurement and reference beams that propagate between the plane plates.

## Revendications

1. Interféromètre comprenant
- une source de lumière (10 ; 110),
- un premier séparateur de faisceaux (30.1 ; 125.1) qui dissocie un faisceau de rayons (S) émis par la source de lumière (10 ; 110) en au moins un faisceau de rayons de mesure (M) et au moins un faisceau de rayons de référence (R), par lesquels est couvert un plan de dissociation (AE) et le faisceau de rayons de mesure (M) se propageant dans un bras de mesure et le faisceau de rayons de référence (R) dans un bras de référence jusqu'à la recombinaison en un point de jonction dans un plan de jonction (VE), le plan de jonction (VE) étant orienté parallèlement au plan de dissociation (AE),
- un réflecteur de référence (50 ; 150) qui est disposé dans le bras de référence, le faisceau de rayons de référence (R) étant au moins trois fois incident sur le réflecteur de référence (50 ; 150),
- un réflecteur de mesure (40 ; 140), lequel est disposé dans le bras de mesure et peut être relié à un objet à mesurer (41 ; 141), le faisceau de rayons de mesure (M) étant au moins trois fois incident sur le réflecteur de mesure (40 ; 140),
- une unité de détection (60 ; 160) par le biais de laquelle peut être détecté au moins un signal de distance à partir des faisceaux de rayons de mesure et de référence (M, R) interférants superposés au niveau du point de jonction concernant la position de l'objet à mesurer (41 ; 141),
- au moins deux plaques planes (20, 30 ; 120, 125, 130) transparentes qui sont disposées l'une derrière l'autre dans le sens de propagation du faisceau et parallèlement l'une à l'autre successivement l'une derrière l'autre dans le trajet du faisceau entre la source de lumière (10 ; 110) et l'unité de détection (60 ; 160), au moins le réflecteur de mesure (40 ; 140) étant mobile le long d'une direction de mesure (MR) par rapport aux plaques planes (20, 30 ; 120, 125, 130) et au réflecteur de référence (50 ; 150), la direction de mesure (MR) correspondant au sens de propagation du faisceau entre les plaques planes (20, 30) et le réflecteur de mesure (40 ; 140) et les plaques planes (20, 30 ; 120, 125, 130) comportant respectivement plusieurs éléments optiques qui exercent un effet optique tel sur le faisceau de rayons de mesure (M) et sur le faisceau de rayons de référence (R) que le faisceau de rayons de mesure (M) et le faisceau de rayons de référence (R) se propagent respectivement en parallèle l'un de l'autre en direction du réflecteur de mesure et de référence (40, 40 ; 140, 150) et
- plusieurs réflecteurs et au moins quatre optiques de représentation pour le faisceau de rayons de mesure (M) et le faisceau de rayons de référence (R) étant formés en tant qu'éléments optiques dans les deux plaques planes (20, 30 ; 120, 125, 130) et
- deux des au moins quatre optiques de représentation produisant respectivement un décalage du faisceau de rayons de mesure (M) et du faisceau de rayons de référence (R) du plan de dissociation (AE) dans un plan intermédiaire (ZE) qui se situe entre le plan de dissociation (AE) et le plan de jonction (VE) et qui est orienté parallèlement à ceux-ci et
- deux des au moins quatre optiques de représentation produisant respectivement un décalage du faisceau de rayons de mesure (M) et du faisceau de rayons de référence (R) du plan intermédiaire (ZE) dans le plan de jonction (VE).

2. Interféromètre selon la revendication 1, comprenant deux plaques planes,
- une première optique de représentation pour le faisceau de rayons de mesure (M) étant disposée dans la deuxième plaque plane (30),
- une deuxième optique de représentation pour le faisceau de rayons de mesure (M) étant disposée dans la première plaque plane (20),
- une troisième optique de représentation pour le faisceau de rayons de référence (M) étant disposée dans la deuxième plaque plane (30) et
- une quatrième optique de représentation pour le faisceau de rayons de référence (M) étant disposée dans la première plaque plane (20)et
- les première et troisième optiques de représentation produisant en outre une augmentation du diamètre du rayon d'entrée du faisceau de rayons incident sur celles-ci et
- les deuxième et quatrième optiques de représentation produisant en outre une réduction du diamètre du rayon du faisceau de rayons incident sur celles-ci au diamètre du rayon d'entrée.

3. Interféromètre selon la revendication 2, les optiques de représentation comprenant respectivement deux lentilles à réseau (30.2, 30.7, 20.5, 20.9, 30.5, 30.9, 20.7, 20.11) réfléchissantes disposées sur un côté d'une plaque plane (20, 30) et un réflecteur (30.3, 20.6, 30.6, 20.8) disposé sur le côté opposé de la plaque plane (20, 30), les côtés réfléchissants des lentilles à réseau (30.2, 30.7, 20.5, 20.9, 30.5, 30.9, 20.7, 20.11) et du réflecteur (30.3, 20.6, 30.6, 20.8) se faisant mutuellement face.

4. Interféromètre selon la revendication 3,
- la première optique de représentation
- possédant une première lentille à réseau (30.2) et une deuxième lentille à réseau (30.7), lesquelles sont toutes deux disposées sur un côté (30_B) de la deuxième plaque plane (30) et
- possédant un premier réflecteur (30.3) disposé sur le côté opposé (30_A) de la deuxième plaque plane (30),
- la première optique de représentation produisant un doublement du diamètre du rayon d'entrée du faisceau de rayons de mesure (M) incident sur celle-ci et
- la deuxième optique de représentation
- possédant une troisième lentille à réseau (20.5) et une quatrième lentille à réseau (20.9), lesquelles sont toutes deux disposées sur un côté (20_A) de la première plaque plane (20) et
- possédant un deuxième réflecteur (20.6) disposé sur le côté opposé (20_B) de la première plaque plane (20),
- la deuxième optique de représentation produisant une division par deux du diamètre du rayon d'entrée du faisceau de rayons de mesure (M) incident sur celle-ci et
- la troisième optique de représentation
- possédant une cinquième lentille à réseau (30.5) et une sixième lentille à réseau (30.9), lesquelles sont toutes deux disposées sur un côté (30_B) de la deuxième plaque plane (30) et
- possédant un troisième réflecteur (30.6) disposé sur le côté opposé (30_A) de la deuxième plaque plane (30),
- la troisième optique de représentation produisant un doublement du diamètre du rayon d'entrée du faisceau de rayons de référence (R) incident sur celle-ci et
- la quatrième optique de représentation
- possédant une septième lentille à réseau (20.7) et une huitième lentille à réseau (20.11), lesquelles sont toutes deux disposées sur un côté (20_A) de la première plaque plane (20) et
- possédant un quatrième réflecteur (20.8) disposé sur le côté opposé (20_B) de la première plaque plane (20),
- la quatrième optique de représentation produisant une division par deux du diamètre du rayon d'entrée du faisceau de rayons de référence (R) incident sur celle-ci.

5. Interféromètre selon la revendication 4, les première, quatrième, cinquième et huitième lentilles à réseau (30.2, 20.9, 30.5, 20.11) possédant respectivement une première distance focale (f) et les deuxième, troisième, sixième et septième lentilles à réseau (30.7, 20.5, 30.9, 20.7) possédant respectivement une deuxième distance focale (2f) qui est égale au double de la première distance focale (f).

6. Interféromètre selon la revendication 1, comprenant trois plaques planes disposées de manière espacée dans le sens de propagation du faisceau,
- une première optique de représentation pour le faisceau de rayons de mesure (M) étant réalisée dans la deuxième et la troisième plaque plane (125, 130),
- une deuxième optique de représentation pour le faisceau de rayons de mesure (M) étant réalisée dans la deuxième et la troisième plaque plane (125, 130),
- une troisième optique de représentation pour le faisceau de rayons de référence (R) étant réalisée dans la première et la deuxième plaque plane (120, 125) et
- une quatrième optique de représentation pour le faisceau de rayons de référence (R) étant réalisée dans la première et la deuxième plaque plane (120, 125) et
- les première et troisième optiques de représentation produisant en outre une augmentation du diamètre du rayon d'entrée du faisceau de rayons incident sur celles-ci et
- les deuxième et quatrième optiques de représentation produisant en outre une réduction du diamètre du rayon du faisceau de rayons incident sur celles-ci au diamètre du rayon d'entrée.

7. Interféromètre selon la revendication 6, les optiques de représentation comprenant respectivement deux lentilles à réseau (130.2, 130.4, 120.4, 120.5, 130.3, 130.5, 120.6, 120.8) réfléchissantes disposées sur une plaque plane (120, 130) et un réflecteur (130.3, 120.6, 130.6, 120.8) disposé sur la plaque plane (125) opposée, les côtés réfléchissants des lentilles à réseau (130.2, 130.4, 120.4, 120.5, 130.3, 130.5, 120.6, 120.8) et du réflecteur (130.3, 120.6, 130.6, 120.8) se faisant mutuellement face.

8. Interféromètre selon la revendication 7,
- la première optique de représentation
- possédant une première lentille à réseau (130.2) et une deuxième lentille à réseau (130.4) qui sont toutes deux disposées sur la troisième plaque plane (130) et
- possédant un premier réflecteur (125.3) disposé sur la deuxième plaque plane (125),
- la première optique de représentation produisant un doublement du diamètre du rayon d'entrée du faisceau de rayons de mesure (M) incident sur celle-ci et
- la deuxième optique de représentation
- possédant une troisième lentille à réseau (120.4) et une quatrième lentille à réseau (120.5) qui sont toutes deux disposées sur la première plaque plane (120) et
- possédant un deuxième réflecteur (125.6) disposé sur la deuxième plaque plane (125),
- la deuxième optique de représentation produisant une division par deux du diamètre du rayon du faisceau de rayons de mesure (M) incident sur celle-ci et
- la troisième optique de représentation
- possédant une cinquième lentille à réseau (130.3) et une sixième lentille à réseau (130.5) qui sont toutes deux disposées sur la troisième plaque plane (130) et
- possédant un troisième réflecteur (125.7) disposé sur la deuxième plaque plane (125),
- la troisième optique de représentation produisant un doublement du diamètre du rayon d'entrée du faisceau de rayons de référence (R) incident sur celle-ci et
- la quatrième optique de représentation
- possédant une septième lentille à réseau (120.6) et une huitième lentille à réseau (120.8) qui sont toutes deux disposées sur la première plaque plane (120) et
- possédant un quatrième réflecteur (125.8) disposé sur la deuxième plaque plane (125),
- la quatrième optique de représentation produisant une division par deux du diamètre du rayon du faisceau de rayons de référence (R) incident sur celle-ci.

9. Interféromètre selon la revendication 8, les première, quatrième, cinquième et huitième lentilles à réseau (130.2, 120.5, 130.3, 120.8) possédant respectivement une première distance focale (f) et les deuxième, troisième, sixième et septième lentilles à réseau (130.4, 120.4, 130.5, 120.6) possédant respectivement une deuxième distance focale (2f) qui est égale au double de la première distance focale (f).

10. Interféromètre selon au moins l'une des revendications précédentes, le premier séparateur de faisceaux (30.1 ; 125.1) sur la deuxième plaque plane (30 ; 130) étant réalisé sous la forme d'une grille ou d'une couche séparatrice de faisceaux optique polarisante lesquels sont respectivement disposés sur un côté (30_A) de la deuxième plaque plane (30 ; 125) qui est orienté en direction de la première plaque plane (20 ; 120).

11. Interféromètre selon au moins l'une des revendications précédentes, le réflecteur de mesure (40 ; 140) et le réflecteur de référence (50 ; 150) étant respectivement réalisés sous la forme d'un réflecteur à miroir plan.

12. Interféromètre selon au moins l'une des revendications précédentes, un segment de ralentissement étant configuré dans le trajet du rayon du faisceau de rayons de mesure (M) de telle sorte que le faisceau de rayons de mesure (M) et le faisceau de rayons de référence (R), entre la dissociation et la recombinaison, traversent des trajets optiques identiques dans l'air et dans les plaques planes (20, 30).

13. Interféromètre selon au moins l'une des revendications précédentes,
- le faisceau de rayons de mesure (M) est incident perpendiculairement sur le réflecteur de mesure (40 ; 140) lors de la deuxième incidence et
- le faisceau de rayons de référence (R) est incident perpendiculairement sur le réflecteur de référence (50 ; 150) lors de la deuxième incidence.

14. Interféromètre selon au moins l'une des revendications précédentes, des entretoises étant disposées entre les plaques planes, lesquelles possèdent des cavités dans la zone des faisceaux de rayons de mesure et de référence qui se propagent entre les plaques planes.
